# EUROPEAN PATENT SPECIFICATION

(11) **EP 2 181 612 B1**
(45) Date of publication and mention of the grant of the patent: **21.08.2013**
(21) Application number: 08778321.3
(22) Date of filing: 23.07.2008
(51) Int. Cl.: A23L 3/3418, A23B 7/148, B01F 5/00, B01F 5/06, C02F 1/50, C12C 11/00, C12G 1/08, C12G 3/02, C12H 1/12

(54) **FOOD PROCESSING METHOD AND FOOD PROCESSING APPARATUS**
VERFAHREN ZUR VERARBEITUNG VON NAHRUNGSMITTELN UND GERÄT ZUR VERARBEITUNG VON NAHRUNGSMITTELN
PROCEDE DE TRAITEMENT D'ALIMENT ET APPAREIL DE TRAITEMENT D'ALIMENT

(30) Priority: 31.07.2007 JP 2007198650
(43) Date of publication of application: 05.05.2010
(73) Proprietor: Nippon Medical School Foundation, Bunkyo-ku, Tokyo 113-8602 (JP)
(72) Inventor: HAYATA, Yasuyoshi, Kawasaki-shi Kanagawa 214-8571 (JP); KOBAYASHI, Fumiyuki, Tokyo 180-8602, (JP)
(74) Representative: Ford, Hazel
(86) International application number: PCT/JP2008/063156
(87) International publication number: WO 2009/016998

(56) References cited:
- EP-A2- 0 786 513
- WO-A1-02/03816
- JP-A- 09 206 044
- JP-A- 11 033 087
- US-A1- 2005 260 309
- US-A1- 2007 148 307

## Description

### Technical Field

The present invention relates to a method for treating food products to sterilize microorganisms or to inactivate enzymes contained in the food products, and an apparatus used therefor. According to the present invention, in comparison with a sterilization method using supercritical carbon dioxide and other methods, costs for apparatuses and running cost can be kept low, and further, smells specific to food products cannot be lost.

### Background Art

Carbon dioxide is in a gaseous state at an ordinary temperature and under an ordinary pressure. However, if temperature and pressure exceed a critical point, carbon dioxide becomes an intermediate state between liquid and gas, which is called a supercritical state. Since carbon dioxide that is in a supercritical state has sterilizing action, it is used in the sterilization of food products and drinking water (Non-Patent Document 1). In order to convert gaseous carbon dioxide to a supercritical state, it is required to add a high pressure that is a critical pressure (7.38 MPa) or more. Thus, a sterilizing apparatus utilizing supercritical carbon dioxide must be a pressure-resistant robust one, and such apparatus requires high costs. In addition, carbon dioxide that is in a supercritical state removes flavor components from a product to be treated therewith. Hence, products having no smells, such as drinking water, are not problematic, but when products having specific smells, such as food products, are treated with such supercritical carbon dioxide, the quality of the products treated therewith must be significantly deteriorated.

On the other hand, carbon dioxide in a gaseous state that is lower than the supercritical state (hereinafter referred to as "low-pressure carbon dioxide") also has sterilizing action. However, the sterilizing action of such low-pressure carbon dioxide is much weaker than that of supercritical carbon dioxide. Accordingly, only a few methods for sterilizing microorganisms utilizing low-pressure carbon dioxide are described in Patent Documents 1-4.

Patent Document 1 describes a method for sterilizing a liquid product, which comprises the steps of: allowing a liquid product containing microorganisms to absorb carbon dioxide under a partial pressure of 5 to 70 atmospheres; and rapidly decreasing the pressure of the pressurized liquid product containing the carbon dioxide obtained in the aforementioned step, wherein the two above steps are repeatedly carried out so as to kill at least a part of the microorganisms contained in the liquid product. However, in this method, the pressure must be rapidly reduced after compression, and thus, this method is disadvantageous in that it comprises complicated operations. Moreover, this method does not involve the direct sterilizing effects of carbon dioxide, but it involves sterilization due to the burst of microorganisms due to rapid decompression from a high pressure, namely, sterilization due to the destruction of cell wall or cell membrane. Hence, the method described in Patent Document 1 differs from the method of the present invention that does not require such rapid decompression.

Patent Document 2 describes a continuous treatment apparatus, which comprises: a liquid material continuously supplying flow channel for continuously supplying a liquid material; an introduction port for introducing into a treatment tank the liquid material supplied through the continuously supplying flow channel, installed on the bottom side of the treatment tank; a supercritical fluid supplying flow channel for converting carbon dioxide from a carbon dioxide supplying source to a supercritical fluid (70 to 400 atm) and then continuously supplying such supercritical fluid; a supercritical fluid microscopic bubble introducing means for introducing into the treatment tank the supercritical fluid supplied through the supercritical fluid supplying flow channel, and at the same time, converting the supercritical fluid to microscopic bubbles (20 µm or less) and releasing them into the liquid material, which is installed on the bottom side of the treatment tank; a product recovering flow channel connected with a liquid discharging port for discharging the liquid material on the upper side of the treatment tank; a supercritical fluid recovering flow channel for discharging the supercritical fluid from a supercritical fluid discharging port installed at the upper portion of the treatment tank; and a recycling flow channel for supplying the supercritical fluid recovered through the supercritical fluid recovering flow channel to the carbon dioxide supplying source, directly or via a recycle tank for gasifying or liquefying the supercritical fluid, wherein the microscopic bubbles of the supercritical fluid and the liquid material are continuously treated in a parallel current flow in the above-described treatment tank. However, since this apparatus uses a supercritical fluid, it unfavorably destroys smells specific to liquid materials or food products.

Patent Document 3 discloses a treatment method applied for the purpose of obtaining effects such as the deactivation of enzymes and sterilization, which comprises: (a) a dissolution step of continuously releasing microscopic bubbles (20 µm or less) of liquid carbon dioxide into a continuously supplied liquid material, so as to dissolve the liquid carbon dioxide in the liquid material; (b) a warming and compressing step of maintaining the liquid material, in which the liquid carbon dioxide has been dissolved, at a certain temperature and under certain pressure conditions (40 to 400 atm), so as to convert the carbon dioxide to a supercritical or subcritical state; and (c) a decompression step of rapidly decompressing the liquid material obtained after the above-described warming and compressing step to remove the carbon dioxide, and at the same time, recovering the product. However, the certain pressure conditions are too high and destroy smells specific to liquid materials or food products. Thus, this method is not favorable.

Patent Document 4 discloses a method for continuously carrying out a treatment of deactivating enzymes or spores contained in liquid food products, liquid drugs, and the like, a sterilization treatment, a treatment of deodorizing liquid food products and the like, and other treatments, which is characterized in that it comprises: a dissolution step of continuously supplying liquid carbon dioxide to a continuously supplied liquid material, so as to dissolve the liquid carbon dioxide in the liquid material; a retention step of retaining the liquid material, in which the liquid carbon dioxide has been dissolved in the above described dissolution step, for a certain period of time; a critical treatment step of maintaining the liquid material, in which the liquid carbon dioxide has been dissolved, at a certain temperature and under certain pressure conditions (40 to 400 atm), so as to convert the carbon dioxide to a supercritical or subcritical state; and a decompression step of rapidly decompressing the liquid material obtained after the above described critical treatment step to remove the carbon dioxide, and at the same time, recovering the product. However, the certain pressure conditions are too high and destroy smells specific to liquid materials or food products. Thus, this method is not favorable.

Patent Document 5 discloses a method of continuously de-activating enzymes, sterilizing or deodorizing a liquid material such as liquid foodstuff or liquid medicine with a super-critical fluid of carbon dioxide. The method includes the following steps: 1) the liquid material is continuously supplied from an inlet at a bottom of a processing tank; 2) micro-particles of the supercritical fluid of the carbon dioxide are formed so that a density of the supercritical fluid is smaller than that of the liquid material; 3) the micro-particles of the supercritical fluid are injected continuously into the liquid material from another inlet at the bottom of the processing tank; and 4) the liquid material and the supercritical fluid are separated into different phases at the top of the processing tank and are taken out of the processing tank separately.

Patent Document 6 discloses techniques to extend the shelf life and facilitate the bulk transport of perishable organic liquids whereby the liquids are mixed with carbon dioxide gas and held under carbon dioxide pressure, in order to extend the time before the liquid spoils or sustains material undesirable biological changes.

Patent Document 7 discloses protein beverages that may be heat treated to inactivate pathogenic microbes in the presence of the carbonation which may be used to provide taste and mouth feel for the drink. Typically, the treatment for pathogenic microbe inactivation is carried out in the individual package used for storage and handling of the protein drink.

Patent Document 8 discloses a continuous method using gaseous carbon dioxide or a pressurized flow of liquefied carbon dioxide to reduce microbial and/or enzymatic activity in a liquid product. The mixture is pressurized after the mixture is formed. The pressure and temperature in the flow regions are maintained at a level which is sufficient to keep the carbon dioxide in a continuous liquid state, but which does not freeze the liquid product.

A microfilter has been used as a means for generating microscopic bubbles in the aforementioned prior art techniques. Thus, as the microfilter repeatedly generates such microscopic bubbles, it becomes clogged. This filter clogging unfavorably decreases operation rate. Such filter clogging decreases the efficiency of generation of microscopic bubbles, and sterilization effects are also rapidly decreased.

The aforementioned Non-Patent Document 1 discloses the following.

A great deal of consideration should be given to the fact that a turgor pressure generated as a result of the instantaneous expansion of supercritical carbon dioxide that expands a hydrophobic region destroys the structures of microorganisms or enzymes. When a filter with a pore diameter of 10 µm was used, the CO₂ concentration became maximum (78% of the saturated solubility). On the contrary, when a filter with a smaller pore diameter was used, the CO₂ concentration was decreased. With regard to the extraction (deodorization) of volatile components, microbubble-state supercritical carbon dioxide is separated from a sample layer at the upper portion of a treatment tank. In a batch method, the CO₂ concentration dependence of the sterilizing effect is small at 0.6 g/cm³ or less, and the sterilizing effect is also low.
In a continuous method, complete sterilization could be achieved by a treatment at 6 MPa for a retention time of 13 minutes. In the continuous method, since cell masses are extremely efficiently destroyed by a turgor pressure generated as a result of the rapid expansion of CO₂ permeated and accumulated in the cell masses, it is considered that an excellent sterilizing effect could be obtained.
[Patent Document 1] Japanese Patent Laid-Open No. Hei 7-289220
[Patent Document 2] Japanese Patent Laid-Open No. Hei 9-206044
[Patent Document 3] Japanese Patent Laid-Open No. 2000-139433
[Patent Document 4] Japanese Patent Laid-Open No. 2001-299303
[Patent Document 5] European Patent Publication EP-A-0 786 513
[Patent Document 6] US Patent Publication 2005/0260309
[Patent Document 7] US Patent Publication 2007/0148307
[Patent Document 8] International Patent Publication WO 02/03816
[Non-Patent Document 1] Mitsuya Shimoda, Yutaka Osashima, Journal of the Japanese Society for food science and technology, Vol. 45, No. 5, pp. 334-339, May 1998

### Disclosure of the Invention

### Problems to be Solved by the Invention

As stated above, a method utilizing low-pressure carbon dioxide to simply sterilize food products, while keeping smells specific to the food products, has not been conventionally known. It is an object of the present invention to provide a simple means for sterilizing microorganisms and a simple means for deactivating enzymes utilizing low-pressure carbon dioxide.

### Means for Solving the Problems

As a result of intensive studies directed towards achieving the aforementioned object, the present inventors have found that when microscopic bubbles of carbon dioxide generated utilizing a negative pressure in the presence of the carbon dioxide and a liquid are allowed to come into contact with a food product, the microscopic bubbles of carbon dioxide exhibit strong sterilizing and enzyme-deactivating action without impairing the flavor of the food product. Based on such findings, the inventor has completed the present invention.

Specifically, the present invention provides the following features [1] to [10].
[1] A method for treating a liquid food product, which is characterized in that the method comprises allowing microscopic bubbles of carbon dioxide generated utilizing a negative pressure in the presence of the carbon dioxide and a liquid to come into contact with a liquid food product containing microorganisms or enzymes at a pressure of 0.2 to 2 MPa in a pressure-resistance container, thereby sterilizing the microorganisms or deactivating the enzymes in the food product.
[2] The method for treating a food product according to [1], which is characterized in that the microscopic bubbles of carbon dioxide are allowed to come into contact with the liquid food product in the presence of ethanol.
[3] The method for treating a food product according to [2], which is characterized in that the abundance of the ethanol in the liquid food product is 0.1 to 30% by mass.
[4] The method for treating a food product according to [1], which is characterized in that the liquid food product is a production intermediate of an alcoholic beverage.
[5] The method for treating a food product according to [4], which is characterized in that the production intermediate of an alcoholic beverage is sake before pasteurization, wine before the addition of sulfurous acid or sulfite, or beer before filtration or heat treatment.
[6] The method for treating a food product according to any one of [1] to [5], which is characterized in that carbon dioxide is recovered after the microscopic bubbles thereof have been allowed to come into contact with the liquid food product and the recovered carbon dioxide is used again in the treatment of a food product.
[7] A method for treating a solid food product, which is characterized in that the method comprises the steps of: (1) maintaining, in a first container, microscopic bubbles of carbon dioxide generated utilizing a negative pressure in the presence of the carbon dioxide and a liquid, at a pressure of 0.2 to 2 MPa in the liquid; (2) placing a solid food product containing microorganisms or enzymes in a second container and then supplying carbon dioxide thereto, such that the pressure in the second container becomes equal to that in the first container; and (3) allowing the liquid in which the microscopic bubbles of carbon dioxide are maintained to come into contact with the solid food product, thereby sterilizing the microorganisms or deactivating the enzymes in the food product.
[8] The method for treating a food product according to [7], which is characterized in that the solid food product is a vegetable or a fruit.
[9] An apparatus for treating a liquid food product, which comprises: a carbon dioxide supplying source; a microscopic bubble generating member that can communicate with the carbon dioxide supplying source and that converts the supplied carbon dioxide to microscopic bubbles; a liquid food product storing tank for storing a liquid food product, inside which the microscopic bubble generating member is disposed; a treated liquid food product storing tank for storing a liquid food product discharged from the liquid food product storing tank; and a carbon dioxide recovering member that can communicate with the treated liquid food product storing tank and the carbon dioxide supplying source and that captures the carbon dioxide in the treated liquid food product storing tank and returns the captured carbon dioxide to the carbon dioxide supplying source,
   the liquid food product treatment apparatus being characterized in that the microscopic bubble generating member for generating the microscopic bubbles of carbon dioxide utilizes a negative pressure in the presence of the carbon dioxide and a liquid to generate the microscopic bubbles of the carbon dioxide.
[10] The apparatus for treating a solid food product, which comprises: a carbon dioxide supplying source; a microscopic bubble generating member that can communicate with the carbon dioxide supplying source and that converts the supplied carbon dioxide to microscopic bubbles; a liquid storing tank for storing a liquid, inside which the microscopic bubble generating member is disposed; and a solid food product storing tank for storing a solid food product that can communicate with the carbon dioxide supplying source and the liquid storing tank,
   the solid food product treatment apparatus being characterized in that the microscopic bubble generating member for generating the microscopic bubbles of carbon dioxide utilizes a negative pressure in the presence of the carbon dioxide and a liquid to generate the microscopic bubbles of the carbon dioxide.

### Advantages of the Invention

According to the present invention, sterilization of microorganisms contained in food products and deactivation of enzymes contained in food products can be carried out without removing the flavor components of the food products and the like, while suppressing deterioration of the quality of the food products and the like to the minimum. In addition, since the present invention does not need a robust apparatus, which is required for a treatment method using supercritical carbon dioxide, costs for apparatuses can be reduced.

### Brief Description of the Drawings

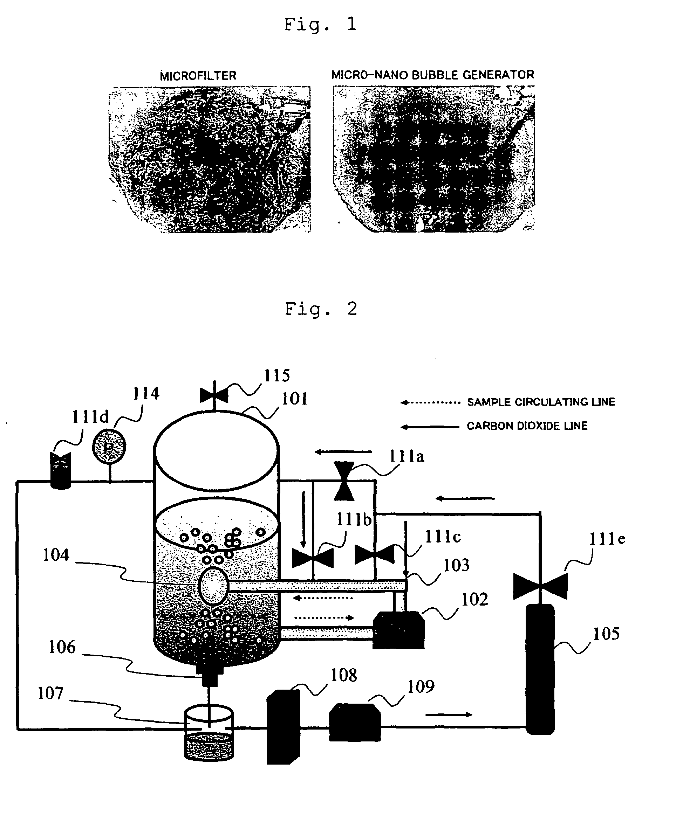

Figure 1 includes photographs showing the appearance of the microscopic bubbles of carbon dioxide. The left photograph shows the conversion of carbon dioxide to microscopic bubbles using a porous filter, and the right photograph shows a state in which carbon dioxide has been converted to microscopic bubbles using a micro-nano bubble generator and the microscopic bubbles have been then left at rest;
Figure 2 is a view showing an example of an apparatus used for the method for treating a liquid food product of the present invention;

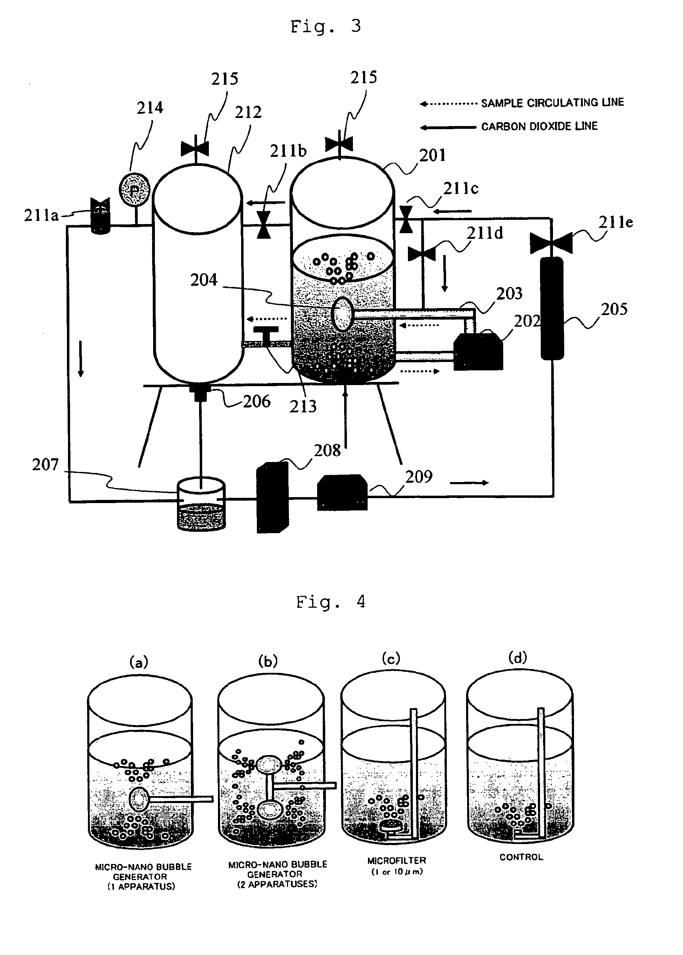

Figure 3 is a view showing an example of an apparatus used for the method for treating a solid food product of the present invention;
Figure 4 is a view showing a method of supplying carbon dioxide;

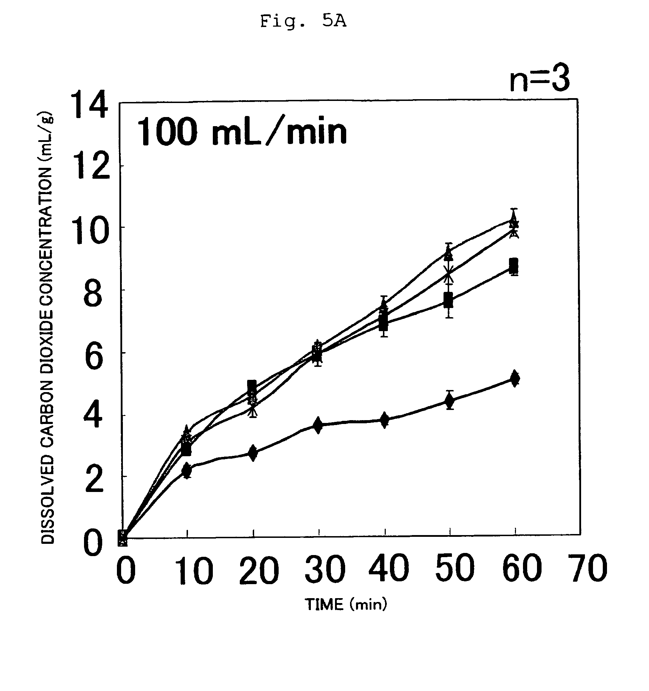

Figure 5A is a view showing the change over time in a dissolved carbon dioxide concentration, when the treatment method of the present invention was applied. The amount of carbon dioxide supplied was set at 100 mL/min. In the figure, the symbol ◆ indicates a dissolved carbon dioxide concentration in a case in which carbon dioxide was released without converting it to microscopic bubbles. The symbol ■ indicates a dissolved carbon dioxide concentration in a case in which carbon dioxide was converted to microscopic bubbles using a porous filter. The symbol ▲ indicates a dissolved carbon dioxide concentration in a case in which carbon dioxide was converted to microscopic bubbles using one micro-nano bubble generator. The symbol × indicates a dissolved carbon dioxide concentration in a case in which carbon dioxide was converted to microscopic bubbles using two micro-nano bubble generators;

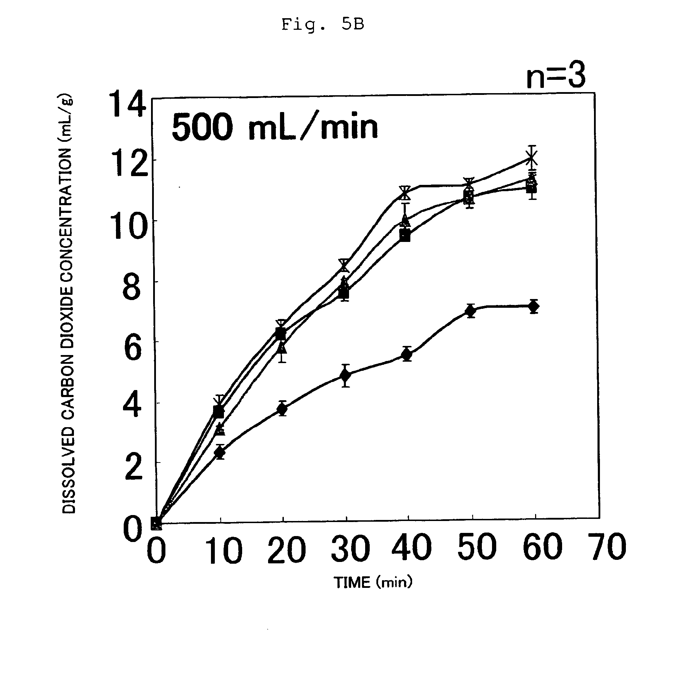

Figure 5B is a view showing the change over time in a dissolved carbon dioxide concentration, when the treatment method of the present invention was applied. The amount of carbon dioxide supplied was set at 500 mL/min. In the figure, the symbol ◆ indicates a dissolved carbon dioxide concentration in a case in which carbon dioxide was released without converting it to microscopic bubbles. The symbol ■ indicates a dissolved carbon dioxide concentration in a case in which carbon dioxide was converted to microscopic bubbles using a porous filter. The symbol ▲ indicates a dissolved carbon dioxide concentration in a case in which carbon dioxide was converted to microscopic bubbles using one micro-nano bubble generator. The symbol × indicates a dissolved carbon dioxide concentration in a case in which carbon dioxide was converted to microscopic bubbles using two micro-nano bubble generators;

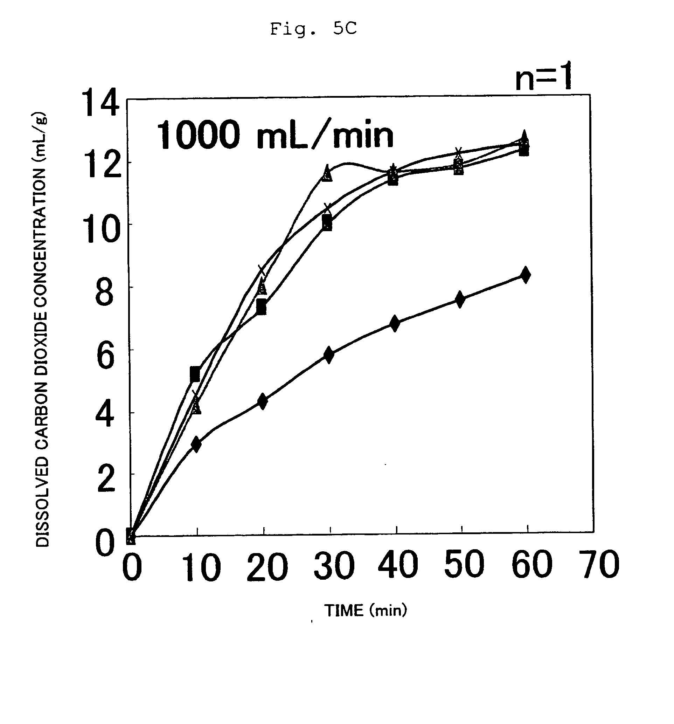

Figure 5C is a view showing the change over time in a dissolved carbon dioxide concentration, when the treatment method of the present invention was applied. The amount of carbon dioxide supplied was set at 1,000 mL/min. In the figure, the symbol ◆ indicates a dissolved carbon dioxide concentration in a case in which carbon dioxide was released without converting it to microscopic bubbles. The symbol ■ indicates a dissolved carbon dioxide concentration in a case in which carbon dioxide was converted to microscopic bubbles using a porous filter. The symbol ▲ indicates a dissolved carbon dioxide concentration in a case in which carbon dioxide was converted to microscopic bubbles using one micro-nano bubble generator. The symbol × indicates a dissolved carbon dioxide concentration in a case in which carbon dioxide was converted to microscopic bubbles using two micro-nano bubble generators;

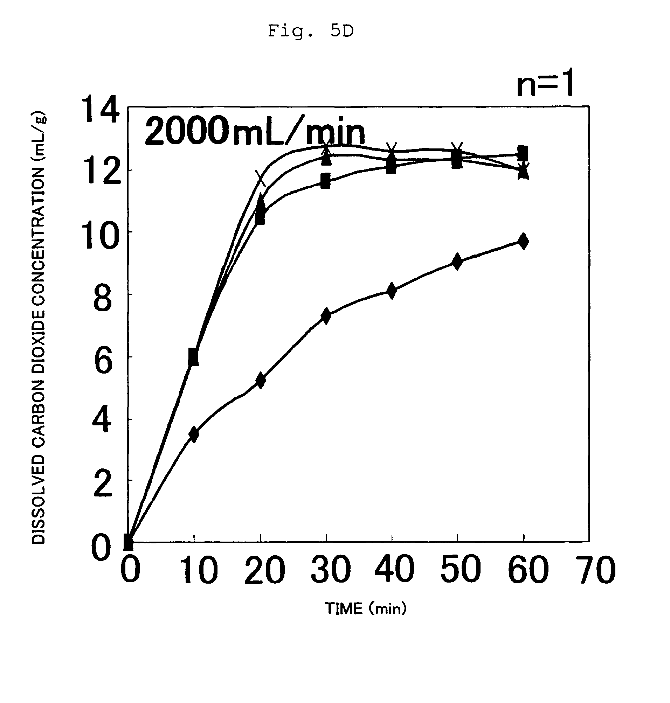

Figure 5D is a view showing the change over time in a dissolved carbon dioxide concentration, when the treatment method of the present invention was applied. The amount of carbon dioxide supplied was set at 2,000 mL/min. In the figure, the symbol ◆ indicates a dissolved carbon dioxide concentration in a case in which carbon dioxide was released without converting it to microscopic bubbles. The symbol ■ indicates a dissolved carbon dioxide concentration in a case in which carbon dioxide was converted to microscopic bubbles using a porous filter. The symbol ▲ indicates a dissolved carbon dioxide concentration in a case in which carbon dioxide was converted to microscopic bubbles using one micro-nano bubble generator. The symbol × indicates a dissolved carbon dioxide concentration in a case in which carbon dioxide was converted to microscopic bubbles using two micro-nano bubble generators;

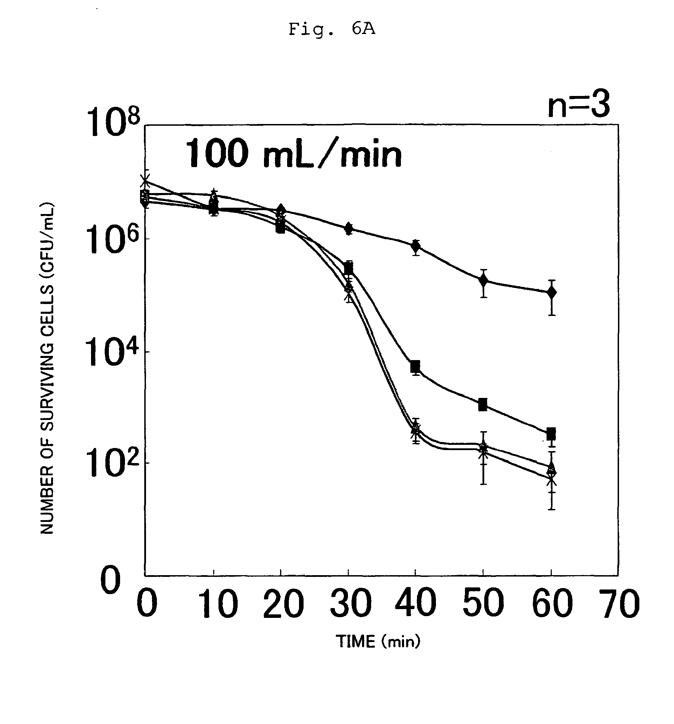

Figure 6A is a view showing the change over time in the number of surviving Escherichia coli cells, when the treatment method of the present invention was applied while changing the amount of carbon dioxide supplied. Herein, the amount of carbon dioxide supplied was set at 100 mL/min. In the figure, the symbol ◆ indicates the number of surviving E. coli cells in a case in which carbon dioxide was released without converting it to microscopic bubbles. The symbol ■ indicates the number of surviving E. coli cells in a case in which carbon dioxide was converted to microscopic bubbles using a porous filter. The symbol A indicates the number of surviving E. coli cells in a case in which carbon dioxide was converted to microscopic bubbles using one micro-nano bubble generator. The symbol × indicates the number of surviving E. coli cells in a case in which carbon dioxide was converted to microscopic bubbles using two micro-nano bubble generators;

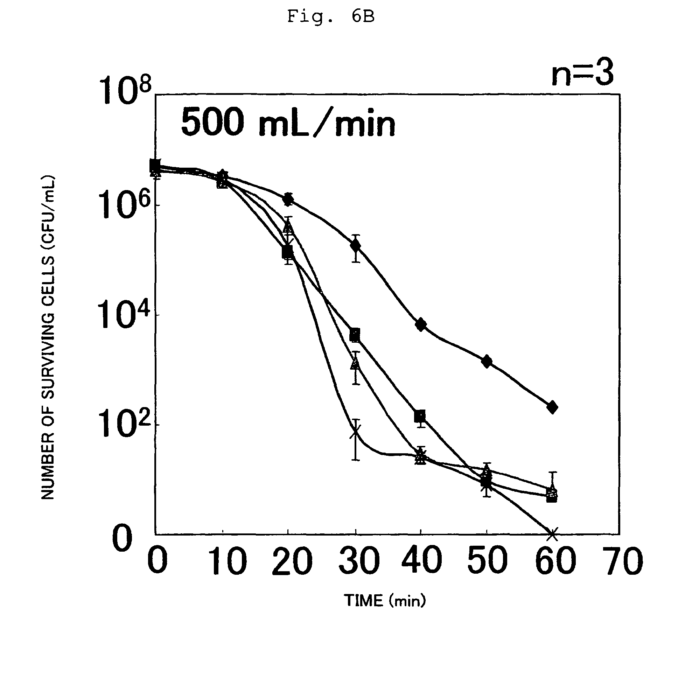

Figure 6B is a view showing the change over time in the number of surviving Escherichia coli cells, when the treatment method of the present invention was applied while changing the amount of carbon dioxide supplied. Herein, the amount of carbon dioxide supplied was set at 500 mL/min. In the figure, the symbol ◆ indicates the number of surviving E. coli cells in a case in which carbon dioxide was released without converting it to microscopic bubbles. The symbol ■ indicates the number of surviving E. coli cells in a case in which carbon dioxide was converted to micro-nano bubbles using a porous filter. The symbol ▲ indicates the number of surviving E. coli cells in a case in which carbon dioxide was converted to microscopic bubbles using one micro-nano bubble generator. The symbol × indicates the number of surviving E. coli cells in a case in which carbon dioxide was converted to microscopic bubbles using two micro-nano bubble generators;

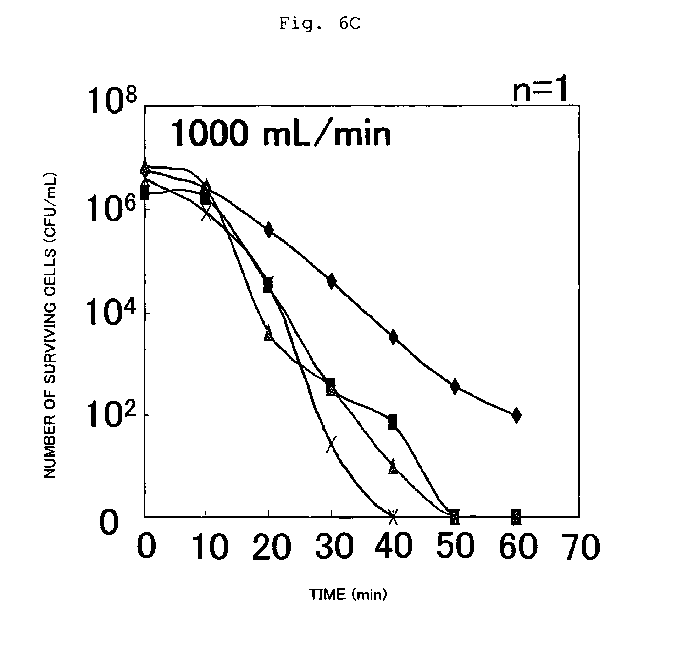

Figure 6C is a view showing the change over time in the number of surviving Escherichia coli cells, when the treatment method of the present invention was applied while changing the amount of carbon dioxide supplied. Herein, the amount of carbon dioxide supplied was set at 1,000 mL/min. In the figure, the symbol ◆ indicates the number of surviving E. coli cells in a case in which carbon dioxide was released without converting it to microscopic bubbles. The symbol ■ indicates the number of surviving E. coli cells in a case in which carbon dioxide was converted to microscopic bubbles using a porous filter. The symbol ▲ indicates the number of surviving E. coli cells in a case in which carbon dioxide was converted to microscopic bubbles using one micro-nano bubble generator. The symbol × indicates the number of surviving E. coli cells in a case in which carbon dioxide was converted to microscopic bubbles using two micro-nano bubble generators;

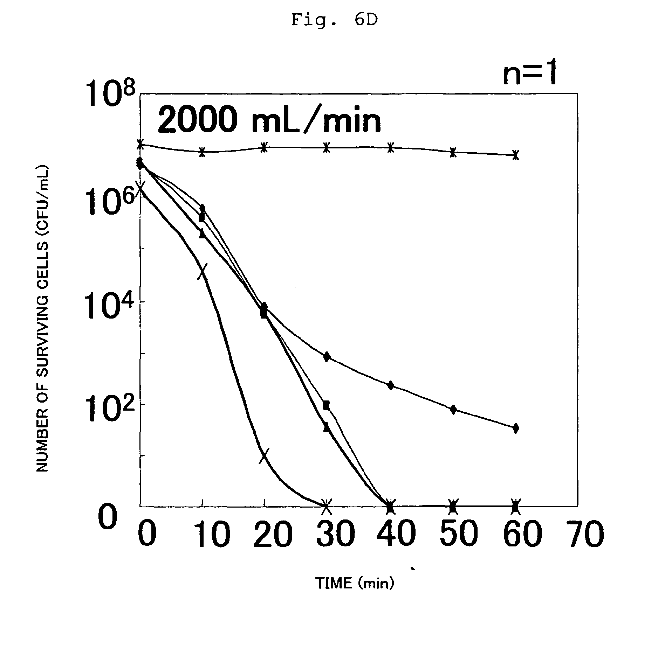

Figure 6D is a view showing the change over time in the number of surviving Escherichia coli cells, when the treatment method of the present invention was applied while changing the amount of carbon dioxide supplied. Herein, the amount of carbon dioxide supplied was set at 2,000 mL/min. In the figure, the symbol ◆ indicates the number of surviving E. coli cells in a case in which carbon dioxide was released without converting it to microscopic bubbles. The symbol ■ indicates the number of surviving E. coli cells in a case in which carbon dioxide was converted to microscopic bubbles using a porous filter. The symbol ▲ indicates the number of surviving E. coli cells in a case in which carbon dioxide was converted to microscopic bubbles using one micro-nano bubble generator. The symbol × indicates the number of surviving E. coli cells in a case in which carbon dioxide was converted to microscopic bubbles using two micro-nano bubble generators. The symbol * indicates the number of surviving E. coli cells in a case in which nitrogen was converted instead of carbon dioxide to microscopic bubbles using two micro-nano bubble generators;

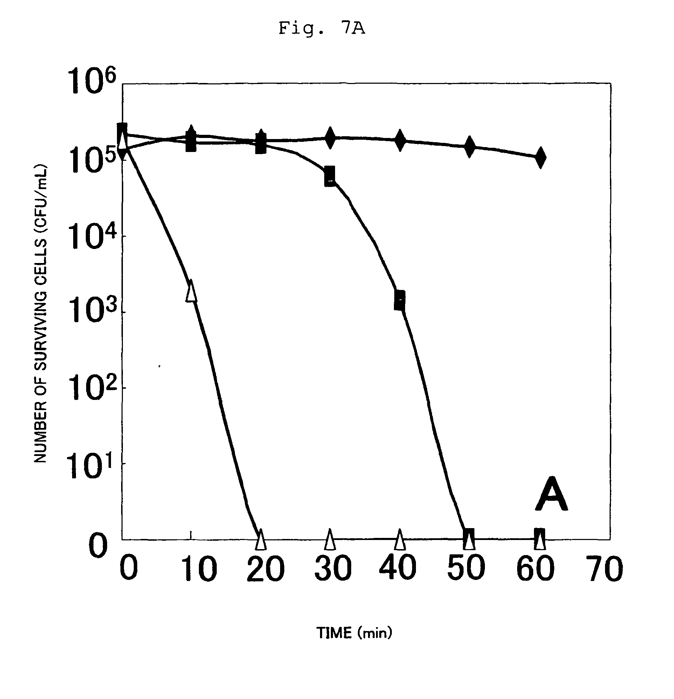

Figure 7A is a view showing the change over time in the number of surviving yeast cells, when the treatment method of the present invention was applied while changing the treatment temperature. The experiment was carried out in the absence of ethanol. The treatment pressure was set at 2 MPa, and the amount of carbon dioxide supplied was set at 2,000 mL/min. In the figure, the symbol ◆ indicates the number of surviving yeast cells in a case in which the treatment temperature was set at 40°C, the symbol ■ indicates the number of surviving yeast cells in a case in which the treatment temperature was set at 45°C, and the symbol Δ indicates the number of surviving yeast cells in a case in which the treatment temperature was set at 50°C;

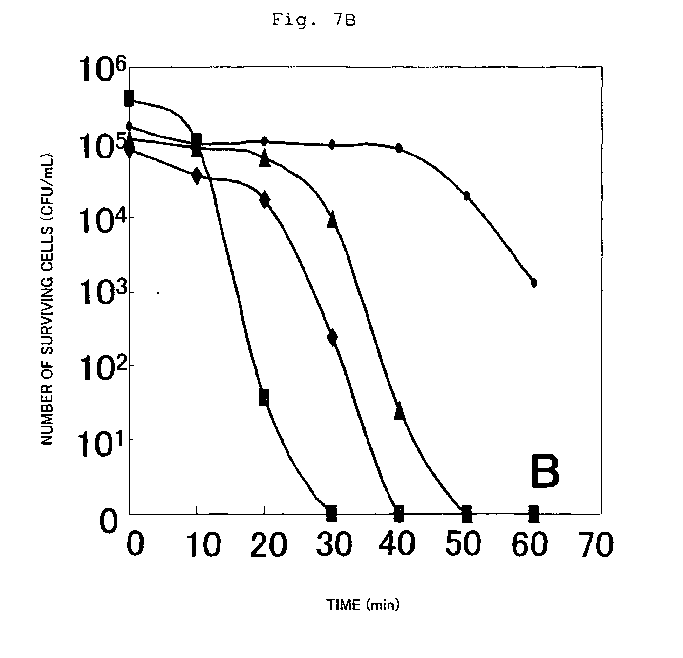

Figure 7B is a view showing the change over time in the number of surviving yeast cells, when the treatment method of the present invention was applied while changing the treatment temperature. The experiment was carried out in the presence of 5% ethanol (or 7% ethanol). The treatment pressure was set at 2 MPa, and the amount of carbon dioxide supplied was set at 2,000 mL/min. In the figure, the symbol ● indicates the number of surviving yeast cells in a case in which the treatment temperature was set at 35°C, the symbol ▲ indicates the number of surviving yeast cells in a case in which the treatment temperature was set at 35°C and the ethanol concentration was set at 7%, the symbol ◆ indicates the number of surviving yeast cells in a case in which the treatment temperature was set at 40°C, and the symbol ■ indicates the number of surviving yeast cells in a case in which the treatment temperature was set at 45°C;

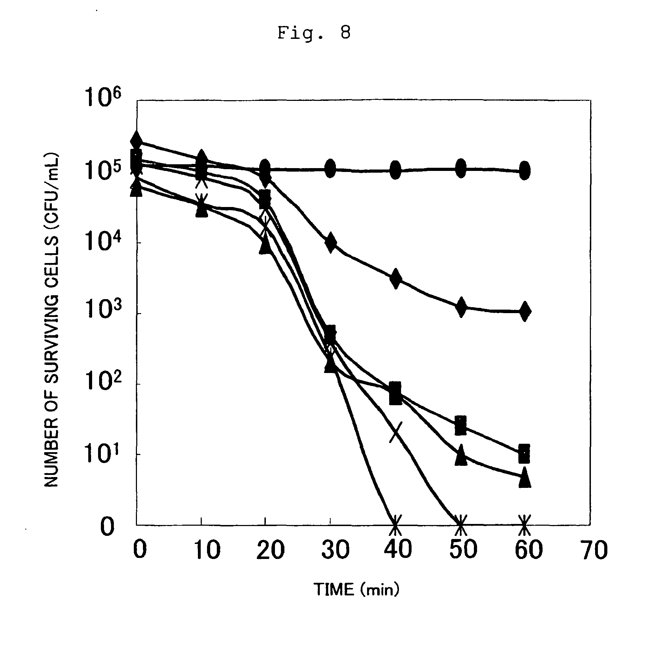

Figure 8 is a view showing the change over time in the number of surviving yeast cells, when the treatment method of the present invention was applied while changing a method of supplying carbon dioxide. The experiment was carried out in the presence of 5% ethanol. The treatment temperature was set at 40°C, the treatment pressure was set at 2 MPa, and the amount of carbon dioxide supplied was set at 2,000 mL/min. In the figure, the symbol ◆ indicates the number of surviving yeast cells in a case in which carbon dioxide was released without converting it to microscopic bubbles. The symbol ■ indicates the number of surviving yeast cells in a case in which carbon dioxide was converted to microscopic bubbles using a porous filter with a pore diameter of 10 µm. The symbol ▲ indicates the number of surviving yeast cells in a case in which carbon dioxide was converted to microscopic bubbles using a porous filter with a pore diameter of 1 µm. The symbol × indicates the number of surviving yeast cells in a case in which carbon dioxide was converted to microscopic bubbles using one micro-nano bubble generator. The symbol * indicates the number of surviving yeast cells in a case in which carbon dioxide was converted to microscopic bubbles using two micro-nano bubble generators. The symbol ● indicates the number of surviving yeast cells in a case in which nitrogen was converted instead of carbon dioxide to microscopic bubbles using two micro-nano bubble generators;

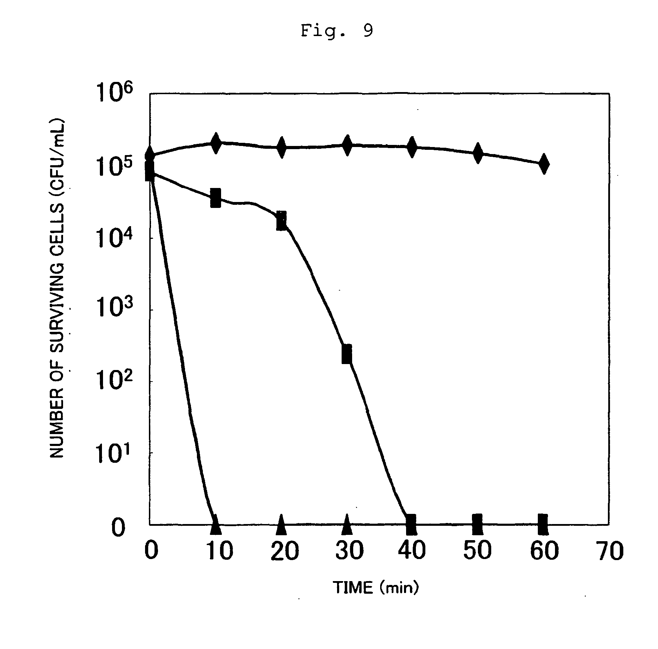

Figure 9 is a view showing the change over time in the number of surviving yeast cells, when the treatment method of the present invention was applied while changing the ethanol concentration. The treatment temperature was set at 40°C, the treatment pressure was set at 2 MPa, and the amount of carbon dioxide supplied was set at 2,000 mL/min. In the figure, the symbol ◆ indicates the number of surviving yeast cells in the absence of ethanol, the symbol ■ indicates the number of surviving yeast cells in the presence of 5% ethanol, and the symbol ▲ indicates the number of surviving yeast cells in the presence of 10% ethanol;

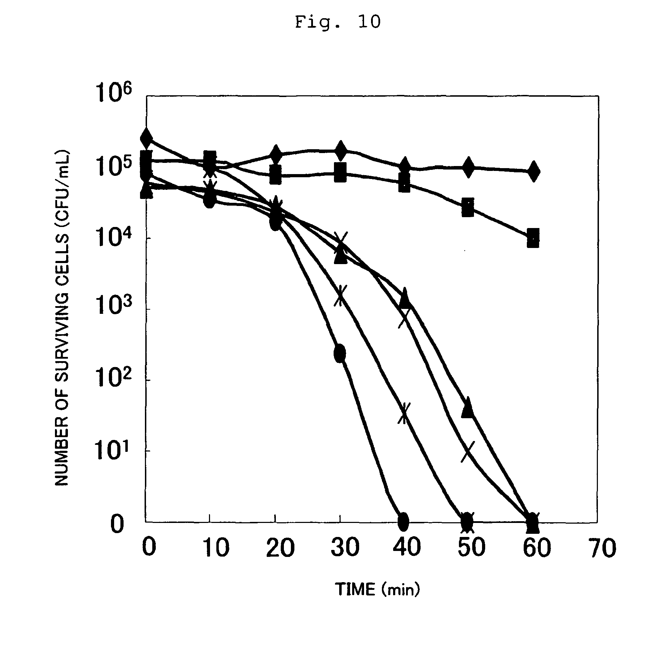

Figure 10 is a view showing the change over time in the number of surviving yeast cells, when the treatment method of the present invention was applied while changing the treatment pressure. The treatment temperature was set at 40°C, the amount of carbon dioxide supplied was set at 2,000 mL/min, and the ethanol concentration was set at 5%. In the figure, the symbol ◆ indicates the number of surviving yeast cells in a case in which the treatment pressure was set at 0 MPa (atmospheric pressure), the symbol ■ indicates the number of surviving yeast cells in a case in which the treatment pressure was set at 0.1 MPa, the symbol ▲ indicates the number of surviving yeast cells in a case in which the treatment pressure was set at 0.3 MPa, the symbol × indicates the number of surviving yeast cells in a case in which the treatment pressure was set at 0.5 MPa, the symbol * indicates the number of surviving yeast cells in a case in which the treatment pressure was set at 1.0 MPa, and the symbol ● indicates the number of surviving yeast cells in a case in which the treatment pressure was set at 2.0 Mpa;

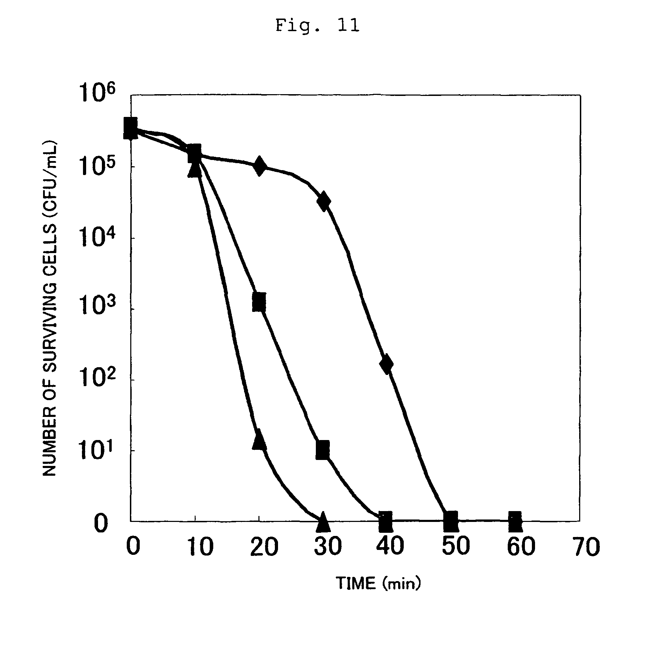

Figure 11 is a view showing the change over time in the number of surviving hiochi bacterial cells, when the treatment method of the present invention was applied while changing the ethanol concentration. The treatment temperature was set at 40°C, the treatment pressure was set at 2 MPa, and the amount of carbon dioxide supplied was set at 2,000 mL/min. In the figure, the symbol ◆ indicates the number of surviving hiochi bacterial cells in the presence of 10% ethanol, the symbol ■ indicates the number of surviving hiochi bacterial cells in the presence of 15% ethanol, and the symbol ▲ indicates the number of surviving hiochi bacterial cells in the presence of 20% ethanol;

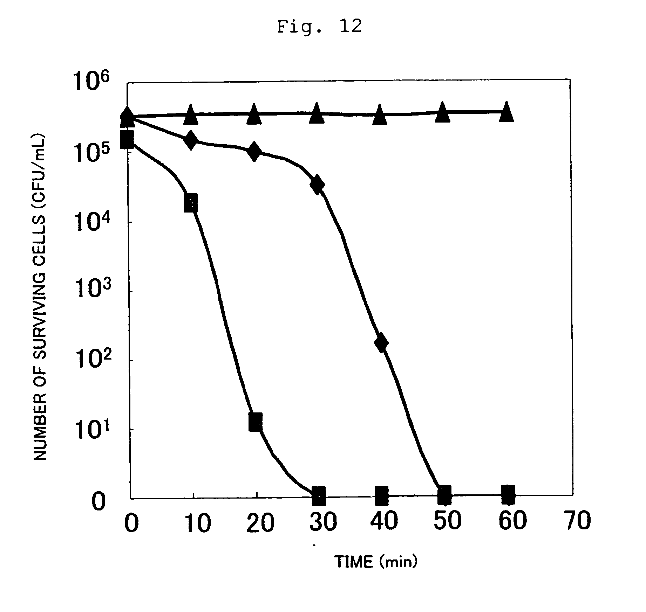

Figure 12 is a view showing the change over time in the number of surviving hiochi bacterial cells, when the treatment method of the present invention was applied while changing the treatment temperature. The treatment pressure was set at 2 MPa, the ethanol concentration was set at 10%, and the amount of carbon dioxide supplied was set at 2,000 mL/min. In the figure, the symbol ◆ indicates the number of surviving hiochi bacterial cells in a case in which the treatment temperature was set at 40°C, the symbol ■ indicates the number of surviving hiochi bacterial cells in a case in which the treatment temperature was set at 45°C, and the symbol ▲ indicates the number of surviving hiochi bacterial cells in a case in which the treatment temperature was set at 40°C and nitrogen was supplied instead of carbon dioxide;

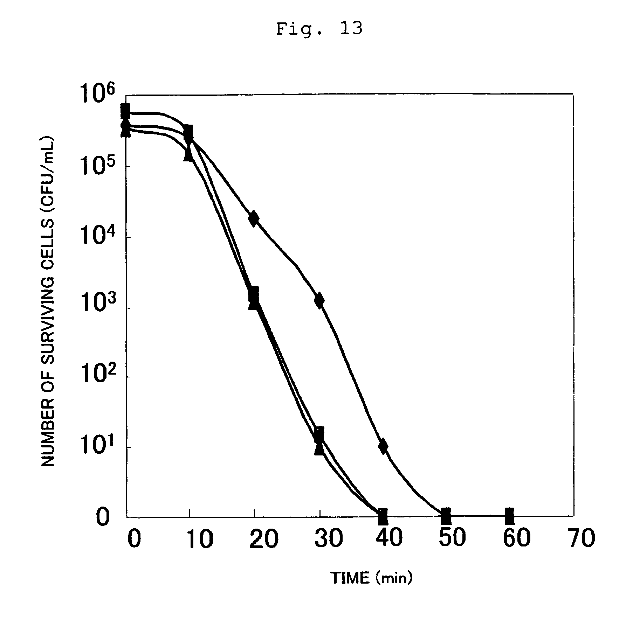

Figure 13 is a view showing the change over time in the number of surviving hiochi bacterial cells, when the treatment method of the present invention was applied while changing the treatment pressure. The treatment temperature was set at 40°C, the amount of carbon dioxide supplied was set at 2,000 mL/min, and the ethanol concentration was set at 15%. In the figure, the symbol ◆ indicates the number of surviving hiochi bacterial cells in a case in which the treatment pressure was set at 0.5 MPa, the symbol ■ indicates the number of surviving hiochi bacterial cells in a case in which the treatment pressure was set at 1.0 MPa, and the symbol ▲ indicates the number of surviving hiochi bacterial cells in a case in which the treatment pressure was set at 2.0 MPa;

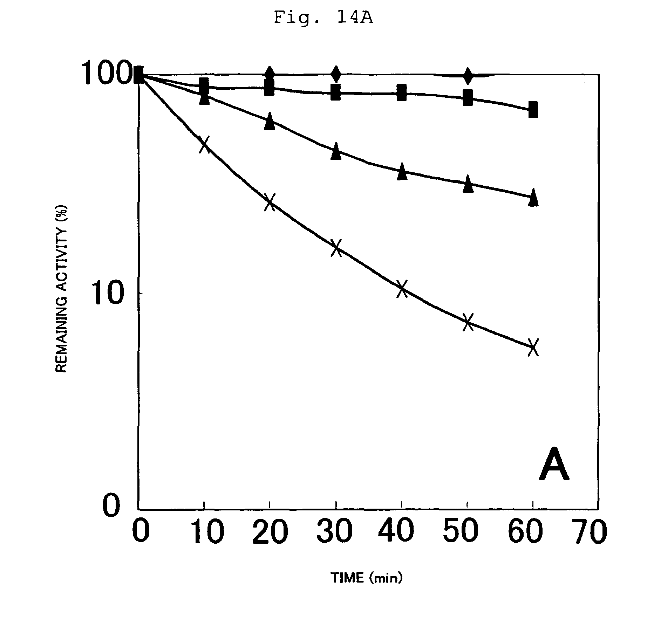

Figure 14A is a view showing the change over time in the remaining activity of an acidic protease enzyme, when only a heat treatment was carried out. The treatment temperature was set at 40°C, and carbon dioxide was not supplied. In the figure, the symbol ◆ indicates the remaining activity in the absence of ethanol, the symbol ■ indicates the remaining activity in the presence of 10% ethanol, the symbol ▲ indicates the remaining activity in the presence of 15% ethanol, and the symbol × indicates the remaining activity in the presence of 20% ethanol;

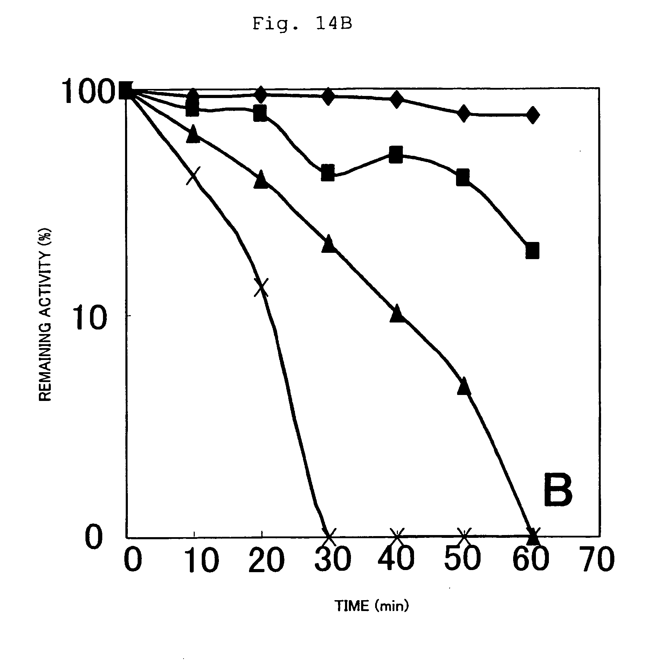

Figure 14B is a view showing the change over time in the remaining activity of an acidic protease enzyme, when a low-pressure micro-nano bubble carbon dioxide treatment was carried out. The treatment temperature was set at 40°C, the treatment pressure was set at 2 MPa, and the amount of carbon dioxide supplied was set at 2,000 mL/min. In the figure, the symbol ◆ indicates the remaining activity in the absence of ethanol, the symbol ■ indicates the remaining activity in the presence of 10% ethanol, the symbol ▲ indicates the remaining activity in the presence of 15% ethanol, and the symbol × indicates the remaining activity in the presence of 20% ethanol;

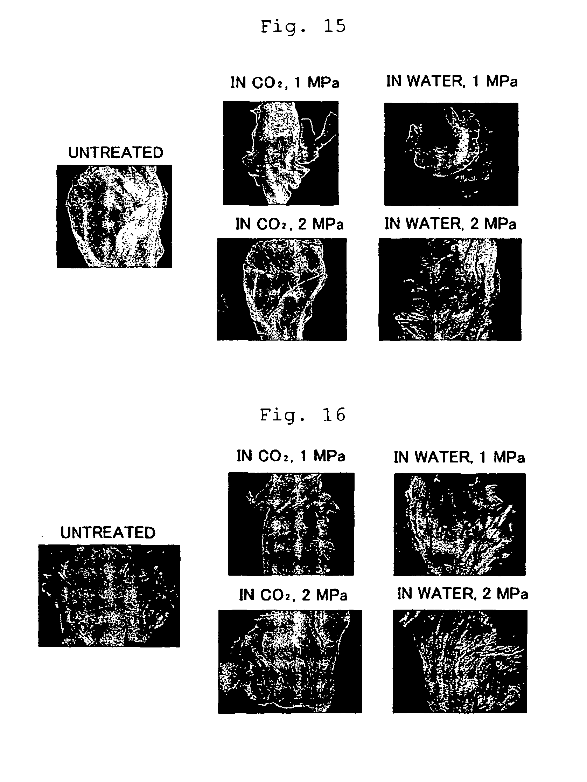

Figure 15 includes photographs of cabbages exposed to distilled water, to which low-pressure carbon dioxide had been supplied (the upper right and lower right photographs in Figure 15). Photographs showing the appearances of cabbages that were placed in low-pressure carbon dioxide and were then exposed to distilled water, to which such low-pressure carbon dioxide had been supplied (the upper center and lower center photographs in Figure 15). A photograph showing the appearance of untreated cabbage (the left photograph in Figure 15); and
Figure 16 includes photographs of lettuces exposed to distilled water, to which low-pressure carbon dioxide had been supplied (the upper right and lower right photographs in Figure 16). Photographs showing the appearances of lettuces that were placed in low-pressure carbon dioxide and were then exposed to distilled water, to which such low-pressure carbon dioxide had been supplied (the upper center and lower center photographs in Figure 16). A photograph showing the appearance of untreated lettuce (the left photograph in Figure 16).

### Description of Symbols

- 101: Liquid food product storing tank
- 102: Food product circulating pump
- 103: Food product tube
- 104: Micro-nano bubble generator
- 105: Carbon dioxide supplying source
- 106: Discharging port
- 107: Treated liquid food product storing tank
- 108: Cooler
- 109: Carbon dioxide compressing pump
- 111: Valve
- 114: Pressure gauge
- 115: Open valve
- 201: Liquid storing tank
- 202: Liquid circulating pump
- 203: Liquid tube
- 204: Micro-nano bubble generator
- 205: Carbon dioxide supplying source
- 206: Discharging port
- 207: Treated liquid storing tank
- 208: Cooler
- 209: Carbon dioxide compressing pump
- 211: Valve
- 212: Solid food product storing tank
- 213: Plug
- 214: Pressure gauge
- 215: Open valve

### Best Mode for Carrying Out the Invention

The present invention will be described in detail below.

The method for treating a food product of the present invention is characterized in that it comprises allowing microscopic bubbles of carbon dioxide to come into contact with a liquid food product or a solid food product that contains microorganisms or enzymes at a pressure of 0.2 to 2 MPa, thereby sterilizing the microorganisms or deactivating the enzymes contained in the food product.

When the treatment pressure is less than 0.2 MPa, a sufficient sterilizing effect cannot be obtained. On the other hand, when the treatment pressure exceeds 2 MPa, it causes problems such as an increase in the loss of the flavor components of the food product and an increase in costs for apparatuses. Thus, the treatment pressure (differential pressure from the atmospheric pressure) is generally set at 0.2 to 2 MPa. Such treatment pressure may be arbitrarily changed within the aforementioned range, depending on the type of a food product, the time required for the contact with a food product, and the like. The treatment pressure is more preferably set at 0.3 to 2 MPa.

The size of a microscopic bubble is not particularly limited, as far as it is within a range in which the effect of sterilizing microorganisms or the effect of deactivating enzymes can be improved. The mean diameter of such a gas bubble is preferably 10 µm or less.

As an apparatus for generating microscopic bubbles of carbon dioxide utilizing a negative pressure in the presence of the carbon dioxide and a liquid, the microscopic bubble generator described in Japanese Patent No. 3682286, namely, an apparatus utilizing a negative pressure caused by the swirling flow of a gas-liquid mixed fluid of carbon dioxide in a pressure-resistance container, thereby generating microscopic bubbles of carbon dioxide due to shearing force, is effectively used. This microscopic bubble generator is used for the purposes of the clarification of water purifying plants and rivers, the clarification of urine discharged from livestock industry, oxygen supply during the transportation of live fish or during fish farming, an increase in dissolved oxygen amount during hydroponic culture, the treatment of sludge water caused by the emergence of slime and the like, the removal of chlorine and the like from a reservoir, sterilization, disinfection and deodorization by ozone mixing, blood circulation promotion during bath, use for washing machine, promotion of the fermentation and culture of fermented food products, dissolution and neutralization due to a high-density contact of various types of drugs with various types of gases, promotion of a gas-liquid reaction in a gas-liquid reactor in a chemical factory, and use for a facial washing machine. This apparatus is used at an ordinary temperature. Moreover, the apparatus described in Japanese Patent Laid-Open No. 2007-229674, which utilizes a negative pressure of a flip-flop flow, is also effective.

Figure 1 includes photographs showing the appearances of microscopic bubbles (left) generated using a porous filter and microscopic bubbles (right) generated using a micro-nano bubble generator. As shown in Figure 1, when the porous filter was used, bubbles were broken at the water surface. On the other hand, when the micro-nano bubble generator was used, such breaking of bubbles was not observed, and they became opaque. From these results, it is assumed that the microscopic bubbles of the present invention are able to continuously act on food products, and further that the use of such microscopic bubbles in a pressure range of 0.2 to 2 MPa significantly enhances their sterilizing action and enzyme-deactivating action. As a liquid used to generate microscopic bubbles utilizing a negative pressure in the presence of carbon dioxide and a liquid in the present invention, a liquid food product applied to the present invention is preferable. If there is no problem even if such liquid food product to be applied is diluted, a liquid such as water may be applied. In addition, when the food product to be applied is a solid food product, a liquid such was water can be preferably applied.

The contact of microscopic bubbles of carbon dioxide with a liquid food product is preferably carried out in the presence of ethanol. Such ethanol may be either originally contained in a liquid food product, or may be added to the liquid product, separately. When ethanol is added to a liquid food product that does not originally contain ethanol, the concentration of ethanol in the liquid food product is not particularly limited. If the ethanol concentration in the liquid food product is less than 0.1% by mass, the effect of enhancing a sterilizing effect and the like becomes weak. On the other hand, if it exceeds 30% by mass, it causes problems such that it affects the quality of the food product. Accordingly, the ethanol concentration is set at generally 0.1% to 30% by mass, and preferably 0.5% to 25% by mass.

The treatment temperature is not particularly limited. If such treatment temperature is less than 20°C, a sufficient sterilizing effect and the like cannot be obtained. On the other hand, if it exceeds 50°C, it is likely to deteriorate the quality of the food product. Accordingly, the treatment temperature is set at generally 20°C to 50°C, and preferably 30°C to 45°C.

The amount of carbon dioxide supplied that is to be contacted with the liquid food product is not particularly limited, either. If carbon dioxide is used at a rate of less than 100 mL/min with respect to 25 L of a solution to be treated, a sufficient sterilizing effect and the like cannot be obtained. On the other hand, if the supply amount exceeds 5,000 mL/min, it cannot be expected to improve such sterilizing effect and the like. Accordingly, the amount of carbon dioxide supplied is set at generally 100 to 5,000 mL/min, and preferably 1,000 to 5,000 mL/min. However, it is assumed that, when the supply amount is small, the abundance of microscopic bubbles of carbon dioxide in a solution to be treated is small, and the effect of the carbon dioxide to sterilize the food product also becomes small. Accordingly, when such sterilizing effect and the like want to be obtained rapidly, the amount of carbon dioxide supplied may be set at 5,000 mL/min. When such sterilizing effect and the like want to be obtained slowly, 1,000 mL/min may be selected as a supply amount. Moreover, if a solution containing sufficient amounts of microscopic bubbles of carbon dioxide is supplied to a solution to be treated, the treatment time can be preferably reduced.

The treatment time is not particularly limited, either. Treatment may be carried out, until a sufficient sterilizing effect and the like can be exhibited. The treatment time is generally 1 to 60 minutes, and preferably 5 to 40 minutes.

As carbon dioxide used in treatment, constantly newly supplied carbon dioxide may be used. However, it is preferable to recover carbon dioxide after it has been allowed to come into contact with a food product and to use the recovered carbon dioxide again in the treatment of a food product, so as to circulate such carbon dioxide. Thus, by circulating carbon dioxide, the amount of carbon dioxide used can be reduced. All types of apparatuses may be used for such circulation of carbon dioxide. It is preferable to use an apparatus, which comprises: a carbon dioxide supplying source; a microscopic bubble generating member that can communicate with the carbon dioxide supplying source and that converts the supplied carbon dioxide to microscopic bubbles; a food product storing tank for storing a food product, inside which the microscopic bubble generating member is disposed; a treated food product storing tank for storing a food product discharged from the food product storing tank; and a carbon dioxide recovering member that can communicate with the treated food product storing tank and the carbon dioxide supplying source and that captures the carbon dioxide generated in the treated food product storing tank and returns the captured carbon dioxide to the carbon dioxide supplying source. In addition, since the pressure in this apparatus is set at 0.2 to 2 MPa during the treatment, this apparatus does not need high pressure resistance.

An example of a treatment apparatus for circulating carbon dioxide is shown in Figure 2. This apparatus comprises a liquid food product storing tank 101, a micro-nano bubble generator 104 used as a microscopic bubble generating member, a carbon dioxide supplying source 105, a treated liquid food product storing tank 107, and a carbon dioxide compressing pump 109 used as a carbon dioxide recovering member. This apparatus further comprises a food product circulating pump 102 and a food product tube 103, which support the generation of microscopic bubbles by the micro-nano bubble generator 104, a cooler 108 for efficiently carrying out the recovery of carbon dioxide, valves 111 (a, b, c, d, and e) and an open valve 115 for adjusting the connection relationship among various members, and a pressure gauge 114 for measuring the pressure in the liquid food product storing tank 101. A food product is circulated between the liquid food product storing tank 101 and the food product tube 103 by the food product circulating pump 102. The both ends of the food product tube 103 are connected with the intermediate portion and bottom portion of the liquid food product storing tank 101, respectively. The micro-nano bubble generator 104 is connected with the tip of the food product tube 103 connecting with the intermediate portion of the liquid food product storing tank 101. The food product tube 103 can communicate with the upper portion (gas phase) of the liquid food product storing tank 101 and the carbon dioxide supplying source 105. By "opening" the valve 111c and the valve 111e and "closing" the valve 111a, carbon dioxide is supplied to the food product that is circulated through the food product tube 103 by the food product circulating pump 102. The thus supplied carbon dioxide is converted to microscopic bubbles by the micro-nano bubble generator 104, and the microscopic bubbles of carbon dioxide are then released into the food product in the liquid food product storing tank 101. The microscopic bubbles of carbon dioxide released into the food product are extremely slowly transferred to the upper portion of the liquid food product storing tank 101. During this movement, carbon dioxide seems to act on the food product, thereby contributing to sterilization and the like. The pressure in the liquid food product storing tank 101 is maintained at a constant value (0.2 to 2 MPa) by appropriately opening and closing the valve 115 while measuring the aforementioned pressure with the pressure gauge 114. At the start time of operation of the apparatus, in order to increase the pressure in the liquid food product storing tank 101, the valve 111a and the valve 111e are opened, and carbon dioxide is supplied from the carbon dioxide supplying source 105 to the upper portion of the liquid food product storing tank 101. When the pressure in the liquid food product storing tank 101 has reached a value of interest, the valve 111a is closed, and the valve 111c is opened. As a result of this operation, carbon dioxide is supplied to the food product in the food product tube 103. Since the carbon dioxide dissolves in the food product, the pressure in the liquid food product storing tank 101 is kept at a constant value for a while. If the amount of the dissolved carbon dioxide exceeds limit, the pressure in liquid food product storing tank 101 starts to increase. Thus, when the pressure has reached a certain value, the valve 111e is closed, so that the supply of carbon dioxide from the carbon dioxide supplying source 105 is terminated. When the pressure in the liquid food product storing tank 101 is decreased due to the discharge of the food product and the like, the valve 111a is opened, new carbon dioxide is supplied from the carbon dioxide supplying source 105, and the pressure in the liquid food product storing tank 101 is maintained at a constant value. The food product allowed to come into contact with the microscopic bubbles of carbon dioxide is continuously or intermittently discharged from a discharging port 106, and it is then transferred to the treated liquid food product storing tank 107. The inside of the treated liquid food product storing tank 107 is adjusted to be at atmospheric pressure. Hence, as a result of a decrease in the pressure, carbon dioxide is released from the food product. The released carbon dioxide is cooled by the cooler 108, and it is then transferred to the carbon dioxide supplying source 105 by the carbon dioxide compressing pump 109. In this apparatus, carbon dioxide is not leaked to the outside, and it is circulated in the apparatus.

In the above described example, a tank-shaped tank is given as an example of the liquid storing tank 101. However, the type of the storing tank is not limited thereto. For example, a horizontally long cylindrical liquid storing tank may be used. A micro-nano bubble generator connected with a food product tube may be approached to one end of this liquid storing tank, and a food product tube inducing a liquid food product in the liquid storing tank to a circulating pump may be approached to the other end of the liquid storing tank.

The type of a liquid food product is not particularly limited. Preferred examples of such liquid food product include production intermediates of alcoholic beverages, such as sake before pasteurization, wine before the addition of sulfurous acid or sulfite, and beer before filtration or heat treatment. In order to sterilize these food products and to deactivate enzymes, treatment methods such as heating, filtration, and the addition of sulfurous acid or sulfite have been applied. Instead of these treatment methods, the treatment method of the present invention can be adopted. In addition to the production intermediates of alcoholic beverages, milk, fruit juice, refreshing beverages, seasonings such as soy sauce or sweet cooking rice wine, tea, pharmaceutical products, and the like can be used as targets to be treated.

The type of a microorganism used as a target to be sterilized is not particularly limited. Microorganisms harmful to human bodies, microorganisms that deteriorate the quality of food products, and other microorganisms can be used as targets to be sterilized. Specific examples of such microorganisms used as targets to be sterilized include: bacteria such as Escherichia coli, lactic acid bacteria, Salmonella, Listeria, Legionella, Aspergillus, and acetic acid bacteria; and yeasts such as beer yeast, sake yeast, wine yeast, and soy sauce yeast.

The type of an enzyme used as a target to be deactivated is not particularly limited. Examples of such enzyme used as a target to be deactivated include acid protease, acid carboxypeptidase, α-glucosidase, α-amylase, β-amylase, glucoamylase, pectinesterase, polyphenol oxidase, and lipase.

This method for treating a liquid food product can also be applied to drinking water. This method is able to sterilize microorganisms contained in such drinking water.

In addition, this method for treating a liquid food product can also be applied to a method for treating a solid food product. Specifically, such a method for treating a solid food product comprises the steps of: (1) maintaining, in a first container, microscopic bubbles of carbon dioxide generated utilizing a negative pressure in the presence of the carbon dioxide and a liquid, at a pressure of 0.2 to 2 MPa in the liquid; (2) placing a solid food product containing microorganisms or enzymes in a second container and then supplying carbon dioxide thereto, such that the pressure in the second container becomes equal to that in the first container; and (3) allowing the liquid in which the microscopic bubbles of carbon dioxide are maintained to come into contact with the solid food product. Thereby, sterilization of microorganisms or deactivation of enzymes contained in the food product can be carried out.

In the step (1), a liquid food product in the above described method for treating a liquid food product is just substituted with a liquid. Thus, this step can be carried out in the same manner as that in the method for treating a liquid food product. Moreover, the second container is connected with the first container via a pipe, so that microscopic bubbles of carbon dioxide in the first container can be supplied to the second container. The type of a liquid used is not particularly limited. Water, a normal saline, and the like can be used.

The type of the solid food product in the step (2) is not particularly limited. Examples of such solid food product include vegetable, fruit, ham, sausage, Amorphophalus konjak, and corn.

The type of an apparatus used in this method for treating a solid food product is not particularly limited. It is preferable to use an apparatus, which comprises: a carbon dioxide supplying source; a microscopic bubble generating member that can communicate with the carbon dioxide supplying source and that converts the supplied carbon dioxide to microscopic bubbles; a liquid storing tank for storing a liquid (a first container), inside which the microscopic bubble generating member is disposed; and a solid food product storing tank for storing a solid food product (a second container) that can communicate with the carbon dioxide supplying source and the liquid storing tank. Moreover, as in the case of a liquid food product, in order to circulate carbon dioxide, there may also be used an apparatus further comprising a treated liquid storing tank for storing a liquid discharged from the solid food product storing tank, and a carbon dioxide recovering member that communicates with the treated liquid storing tank and the carbon dioxide supplying source and that captures carbon dioxide generated in the treated liquid storing tank and then returns the captured carbon dioxide to the carbon dioxide supplying source. In addition, since the pressure in this apparatus is set at 0.2 to 2 MPa during the treatment, this apparatus does not need high pressure resistance.

An example of an apparatus for treating a solid food product is shown in Figure 3. This apparatus comprises a solid food product storing tank 212, a liquid storing tank 201, a micro-nano bubble generator 204 used as a microscopic bubble generating member, a carbon dioxide supplying source 205, a treated liquid storing tank 207, and a carbon dioxide compressing pump 209 used as a carbon dioxide recovering member. This apparatus further comprises a liquid circulating pump 202 and a liquid tube 203, which support the generation of microscopic bubbles by the micro-nano bubble generator 204, a cooler 208 for efficiently carrying out the recovery of carbon dioxide, valves 211 (a, b, c, d, and e) and an open valve 215 for adjusting the connection relationship among the members, a plug 213, and a pressure gauge 214 for measuring the pressure in the liquid storing tank 201 and in the solid food product storing tank 212.

A liquid is circulated between the liquid storing tank 201 and the liquid tube 203 by the liquid circulating pump 202. The both ends of the liquid tube 203 are connected with the intermediate portion and bottom portion of the liquid storing tank 201, respectively. The micro-nano bubble generator 204 is connected with the tip of the liquid tube 203 connecting with the intermediate portion of the liquid storing tank 201. The liquid tube 203 can communicate with the upper portion (gas phase) of the liquid storing tank 201 and the carbon dioxide supplying source 205. By "opening" the valve 211d and the valve 211e and "closing" the valve 211c, carbon dioxide is supplied to the liquid that is circulated through the liquid tube 203 by the liquid circulating pump 202. The thus supplied carbon dioxide is converted to microscopic bubbles by the micro-nano bubble generator 204, and the microscopic bubbles of carbon dioxide are then released into the liquid in the liquid storing tank 201. The microscopic bubbles of carbon dioxide released into the liquid are extremely slowly transferred to the upper portion of the liquid storing tank 201. The pressure in the liquid storing tank 201 is maintained at a constant value (0.2 to 2 MPa) by appropriately opening and closing the valve 215 while measuring the pressure with the pressure gauge 214. At the start time of operation of the apparatus, in order to increase the pressures in the liquid storing tank 201 and in the solid food product storing tank 212, the valve 211b, the valve 211c, and the valve 211e are opened, and carbon dioxide is supplied from the carbon dioxide supplying source 205 to the upper portion of the liquid storing tank 201 and also to the solid food product storing tank 212. When the pressures in both tanks have reached values of interest, the valve 211c is closed, and the valve 211d is opened. As a result of this operation, carbon dioxide is supplied to the liquid in the liquid tube 203. Since such carbon dioxide supplied dissolves in the liquid, the pressures in the liquid storing tank 201 and in the solid food product storing tank 212 are kept at constant values for a while. If the amount of the dissolved carbon dioxide exceeds limit, the pressure starts to increase. Thus, when the pressure has reached a certain value, the valve 211e is closed, so that the supply of carbon dioxide from the carbon dioxide supplying source 205 is terminated. When the pressures in the liquid storing tank 201 and in the solid food product storing tank 212 are decreased due to the discharge of the liquid and the like, the valve 211c is opened in a state in which the valve 211d is closed, new carbon dioxide is supplied from the carbon dioxide supplying source 205, so that the pressure of carbon dioxide is maintained at a constant value. During this operation, the liquid allowed to come into contact with the microscopic bubbles of carbon dioxide for a certain period of time is transferred to the solid food product storing tank 212 by opening a plug 213, so that the liquid is allowed to come into contact with a solid food. The liquid allowed to come into contact with the solid food product is then discharged from a discharging port 206, and it is then transferred to a treated liquid storing tank 207. The inside of the treated liquid storing tank 207 is adjusted to be at atmospheric pressure. Hence, as a result of a decrease in the pressure, carbon dioxide is released from the liquid. The released carbon dioxide is cooled by the cooler 208, and it is then transferred to the carbon dioxide supplying source 205 by the carbon dioxide compressing pump 209. Thus, since treatment is carried out, separately, in the two tanks, namely, in the liquid storing tank 201 and in the solid food product storing tank 212, the addition of a physical force to the solid food product can be avoided.

In the above described example, the solid food product storing tank 212 is disposed on the side downstream of the liquid storing tank 201. However, it is also possible that the solid food product storing tank 212 that is formed in a cage shape be remained at the upper portion of the liquid storing tank 201, and that, when microscopic bubbles of carbon dioxide are sufficiently generated, the cage be moved down, so that a solid food product in the cage be allowed to come into contact with the microscopic bubbles of carbon dioxide.

### Examples

Hereinafter, the present invention will be described more in detail in the following examples.

### [Example 1] Sterilization experiment on microorganisms in normal saline

### (1) Experimental methods

### (1-1) Preparation of microorganism suspension

The suspensions of Escherichia coli (Escherichia coli NBRC14237), yeast (Saccharomyces cerevisiae NBRC10217), and hiochi bacteria (Lactobacillus fructivorans s36) were each prepared as follows. A platinum loop of cell mass of the Escherichia coli was suspended in 10 mL of a nutrient medium (Difco) in a test tube, a platinum loop of cell mass of the yeast was suspended in 10 mL of an YM medium (Difco) in a test tube, and a platinum loop of cell mass of the hiochi bacteria was suspended in 10 mL of an S.I. medium containing 10% ethanol (the Brewing Society of Japan) in a test tube. The Escherichia coli was cultured at 37°C for 16 hours, the yeast was cultured at 30°C for 10 hours, and the hiochi bacteria was cultured at 30°C for 7 days. Thereafter, the culture solutions of the Escherichia coli and yeast were each added to Erlenmeyer flasks containing 190 mL of a nutrient medium and 300 mL of an YM medium, respectively. The Escherichia coli was subjected to a culture with shaking at 37°C for 24 hours, and the yeast was subjected to a culture with shaking at 30°C for 12 hours. In addition, 0.5 mL of the culture solution of the hiochi bacteria was transferred to 10 mL of an S.I. medium containing 15% ethanol, and it was then cultured at 30°C for 7 days. A cell mass was collected from each of the culture solutions by 2 times of centrifugation (4°C, 10,000x g, 10 minutes), and the collected cell mass was then suspended in a normal saline, resulting in an initial cell number of 10⁵ to 10⁶ CFU/mL, so as to prepare each sample, which was then used in the subsequent experiments.

### (1-2) Measurement of number of surviving cells

For the measurement of the number of surviving cells of each of the Escherichia coli, yeast, and hiochi bacteria, 0.1 mL of each type of sample was diluted by 1/10 in a stepwise manner, and the thus diluted samples were then applied onto a standard method agar (Nissui Pharmaceutical Co., Ltd.), an YM agar, and an S.I. agar, respectively. The Escherichia coli was cultured at 37°C for 24 hours, the yeast was cultured at 30°C for 48 hours, and the hiochi bacteria was cultured at 30°C for 10 days. Thereafter, the number of colonies formed was counted.

### (1-3) Supply of carbon dioxide

As shown in Figure 4(a) to (d), carbon dioxide was supplied by three methods: (1) the supply of carbon dioxide using a micro-nano bubble generator (Figure 4(a) and (b)); (2) the supply of carbon dioxide using a microfilter (Figure 4(c)); and (3) the supply of carbon dioxide without using the microscopic bubbles of carbon dioxide (control; Figure 4(d)).

The supply of carbon dioxide using a micro-nano bubble generator was carried out as follows, employing the apparatus of Figure 2 (wherein, however, circulation of carbon dioxide was not carried out). 25 L of a sample placed in 30 L of a liquid food product storing tank 101 (manufactured by Terada Iron Works Co., Ltd.) was warmed to each experimental temperature, and carbon dioxide was supplied to the head space portion of the liquid food product storing tank 101, until it reached each experimental pressure, so that the experiment was started. Micro-nano bubbles of carbon dioxide were generated by circulating the sample at a rate of 20 L/min using a food product circulating pump 102 (manufactured by Teikoku Electric MFG Co., Ltd.), supplying carbon dioxide from around the outlet of the food product circulating pump 102, and then allowing a sample-carbon dioxide mixed fluid to pass through a micro-nano bubble generator 104 connected with the tip of a food product tube 103 in the liquid food product storing tank 101. For the generation of such micro-nano bubbles of carbon dioxide, there was used BT-50 (manufactured by Bubbletank Co., Ltd.), which utilizes a negative pressure caused by the swirling flow of a gas-liquid mixed fluid.

The supply of carbon dioxide using a microfilter was carried out by inducing carbon dioxide to the bottom of the liquid food product storing tank 101 (Figure 4(c)), as carbon dioxide going through a microfilter having a pore diameter of 1 µm or 10 µm (manufactured by Suzuki Shoko Co., Ltd.).

A discharging port 106 was slowly opened, and the treated sample was collected every 10 minutes for 60 minutes. The concentration of dissolved carbon dioxide, the number of surviving cells, and enzyme activity were measured.

### (1-4) Treatment conditions

The concentration of dissolved carbon dioxide was measured at a treatment temperature of 40°C, at a treatment pressure of 2 MPa (which hereinafter means a differential pressure from the atmospheric pressure), and at amounts of carbon dioxide supplied of 100, 500, 1,000, and 2,000 mL/min.

Sterilization of the Escherichia coli was carried out at a treatment temperature of 40°C and at a treatment pressure of 2 MPa, and nitrogen was supplied as a control at a rate of 2,000 mL/min.

Sterilization of the yeast was carried out at treatment temperatures of 35°C, 40°C, 45°C and 50°C, at treatment pressures of 0, 0.3, 0.5, 1 and 2 MPa, at an amount of carbon dioxide supplied of 2,000 mL/min, and at ethanol concentrations in the sample of 0% and 5%.

Sterilization of the hiochi bacteria was carried out at treatment temperatures of 40°C and 45°C, at treatment pressures of 0, 0.5, 1 and 2 MPa, at an amount of carbon dioxide supplied of 2,000 mL/min, and at ethanol concentrations in the sample of 10%, 15% and 20%.

### (2) Experimental results

### (2-1) Dissolved carbon dioxide concentration

There was observed no significant difference in the concentration of the dissolved carbon dioxide between the case of using the micro-nano bubble generator and the case of using the microfilter (Figures 5A, B, C, and D). In a case in which the amount of carbon dioxide supplied was 500 mL/min or more, after a certain period of time had passed, the state tended to become saturated if the dissolved carbon dioxide concentration increased to 12 mL/g (Figures 5C and D). This result demonstrates that it is effective to increase the rate of supplying carbon dioxide to obtain such saturated state rapidly.

As described later, in terms of the sterilizing effect of carbon dioxide on microorganisms, a significant difference was generated between the case of using a micro-nano bubble generator and the case of using a microfilter. Thus, it was revealed that the sterilizing effect of carbon dioxide does not only depend on the concentration of the dissolved carbon dioxide.

### (2-2) Influence of amount of carbon dioxide supplied on sterilization of Escherichia coli

As the amount of carbon dioxide amount supplied was increased, the sterilizing effect thereof was also increased (Figures 6A, B, C, and D). As a method of supplying carbon dioxide, a method using a micro-nano bubble generator is effective, and further, the sterilizing effect of carbon dioxide was particularly improved by installing the two above apparatuses (Figures 6A, B, C, and D). The sterilizing effect of the control was low (Figures 6A, B, C, and D). In a case in which nitrogen was used instead of carbon dioxide, completely no sterilizing effects were obtained (Figure 6D). Furthermore, when Figure 5 is compared with Figure 6, it is found that, when the carbon dioxide concentration became saturated, the sterilizing effect of the carbon dioxide also became high.

### (2-3) Influence of treatment temperature on sterilization of yeast

As the temperature was increased, the sterilizing effect was also increased (Figures 7A and B). In addition, the sterilizing effect was significantly increased when ethanol was present (Figures 7A and B).

### (2-4) Influence of method of supplying carbon dioxide on sterilization of yeast

As in the case of Escherichia coli, the method using a micro-nano bubble generator had the highest sterilizing effect (Figure 8). In the case of using a microfilter, the sterilizing effect of a method using a microfilter with a pore diameter of 1 µm was somewhat higher than a method using a microfilter with a pore diameter of 10 µm (Figure 8). However, both filters could not achieve complete sterilization within 60 minutes. Moreover, the sterilizing effect was decreased after 30 minutes had passed. This was considered because clogging or the like occurred. The use of nitrogen had no sterilizing effects at all, as in the case of sterilization of Escherichia coli (Figure 8).

### (2-5) Influence of ethanol concentration on sterilization of yeast

As the concentration of ethanol was increased, the sterilizing effect was increased (Figure 9).

### (2-6) Influence of treatment pressure on sterilization of yeast

When the treatment pressure was 0.3 MPa or more, a sufficient sterilizing effect was exhibited (Figure 10).

### (2-7) Influence of ethanol concentration on sterilization of hiochi bacteria

As the concentration of ethanol was increased, the sterilizing effect was increased (Figure 11).

### (2-8) Influence of treatment temperature on sterilization of hiochi bacteria

As the treatment temperature was increased, the sterilizing effect was increased (Figure 12). As in the case of sterilization of Escherichia coli and yeast, the use of nitrogen had no sterilizing effects at all (Figure 12).

### (2-9) Influence of treatment pressure on sterilization of hiochi bacteria

When the treatment pressure was set at 1 MPa or at 2 MPa, there was almost no difference between them in terms of sterilizing effect (Figure 13). When the pressure was set at 0.5 MPa, the sterilizing effect was somewhat lower than in the cases of the two other pressures (Figure 13).

### [Example 2] Enzyme deactivation experiment

### (1) Experimental methods

### (1-1) preparation of acid protease solution

Acid protease (HBI Enzymes Inc.) suspended in a McIlvaine buffer (pH 3.0) at a concentration of 100 µg/mL was used.

### (1-2) Low-pressure micro-nano bubble carbon dioxide treatment apparatus

A low-pressure micro-nano bubble carbon dioxide treatment apparatus was used in the same manner as that of Example 1.

### (1-3) Treatment conditions

Such acid protease was deactivated at a treatment temperature of 40°C, at a treatment pressure of 2 MPa, at an amount of carbon dioxide supplied of 2,000 mL/min, and at ethanol concentrations of 0%, 10%, 15%, and 20%. As a control, an experiment was carried out in a water bath of 40°C only by a heat treatment without supplying carbon dioxide.

### (1-4) Measurement of acid protease activity

Using casein as a substrate, the activity of the acid protease was measured by performing an enzyme reaction at 37°C at pH 3.0 for 10 minutes. Thereafter, trichloroacetic acid was added to this reaction solution to terminate the reaction, and the precipitate was then filtrated. A phenol reagent was added to the filtrate for color development, and the absorbance at 660 nm was then measured. The remaining activity of the enzyme was indicated as a relative activity to the activity of untreated enzyme, and it was expressed by a percentage (%).

### (2) Experimental results

The change over time in the remaining activity of the acid protease when a low-pressure micro-nano bubble carbon dioxide treatment was carried out is shown in Figure 14B. In addition, the change over time in the above remaining activity when only a heat treatment was carried out is shown in Figure 14A.

Only by the heat treatment, the enzyme was not completely deactivated even if the ethanol concentration was high (Figure 14A). In contrast, in the case in which the low-pressure micro-nano bubble carbon dioxide treatment was carried out, the enzyme was completely deactivated at an ethanol concentration of 15% or more (Figure 14B).

### [Example 3] Sterilization experiment on vegetables (1) Experimental methods

### (1-1) Effect of pre-treatment with low-pressure carbon dioxide on vegetables

This experiment was carried out using the apparatus for treatment a solid food product shown in Figure 3 (wherein, however, circulation of carbon dioxide was not carried out). 25 L of distilled water placed in 30 L of a liquid storing tank 201 was warmed to 40°C, and commercially available cabbage and lettuce were then immersed in the distilled water. Carbon dioxide, which had been converted to microscopic bubbles using a micro-nano bubble generator 204, was supplied thereto, until pressures reached 1 and 2 MPa. After the reaction solution had been retained for 30 minutes, carbon dioxide was slowly released from the head space portion of the liquid storing tank 201 through an open valve 215, so that the pressure in the liquid storing tank 201 was decreased to the atmospheric pressure. Thereafter, the cabbage and lettuce were taken out and then observed.

At the same time, a cabbage and a lettuce were placed in a solid food product storing tank 212, and carbon dioxide was then supplied thereto, until pressures reached 1 and 2 MPa. Thereafter, distilled water, in which the concentration of the dissolved carbon dioxide became saturated by converting carbon dioxide to microscopic bubbles using a micro-nano bubble generator 204 in the liquid storing tank 201 by the aforementioned method, was introduced into the solid food product storing tank 212. After the reaction solution had been retained for 30 minutes, carbon dioxide was slowly released from the head space portion of the solid food product storing tank 212 through the open valve 215, so that the pressure in the solid food product storing tank 212 was decreased to the atmospheric pressure. Thereafter, the cabbage and lettuce were taken out and then observed.

### (1-2) Sterilizing effect on microorganisms attached to vegetables

A commercially available cabbage, onto which Escherichia coli had been applied, was placed in a solid food product storing tank 212, and carbon dioxide gas was added thereto to a pressure of 1 MPa. Thereafter, distilled water, in which the concentration of the dissolved carbon dioxide became saturated by converting carbon dioxide to microscopic bubbles using a micro-nano bubble generator 204 in a liquid storing tank 201, was introduced into the solid food product storing tank 212. The cabbage was treated with the distilled water, and the sterilizing effect was then analyzed. At the same time, a cabbage, onto which Escherichia coli had been applied, was only exposed to 1 MPa carbon dioxide gas, and the sterilizing effect was then analyzed.

### (2) Experimental results

### (2-1) Effect of pre-treatment with low-pressure carbon dioxide on vegetables

In a case in which a cabbage and a lettuce were directly immersed in distilled water, to which carbon dioxide had been supplied such that the pressures in the liquid storing tank 201 had become 1 and 2 MPa without previously compressing with carbon dioxide, water was infiltrated into the vegetables, resulting in a decrease in the quality of the products (the upper right and lower right photographs in Figure 15, and the upper right and lower right photographs in Figure 16). On the other hand, in a case in which a cabbage and a lettuce were left in 1 MPa and 2 MPa carbon dioxide and were then immersed in distilled water, to which carbon dioxide had been supplied, no change was observed in terms of the quality of the cabbage and lettuce (the upper center and lower center photographs in Figure 15, and the upper center and lower center photographs in Figure 16).

### (2-2) Sterilizing effect on microorganisms attached to vegetables

10⁶ CFU/mL Escherichia coli applied onto a cabbage became 0 CFU/mL within 20 minutes after the cabbage was immersed in water contained in the solid food product storing tank 212, to which carbon dioxide had been supplied to a pressure of 1 MPa. However, almost no sterilizing effect was obtained only by exposing it to carbon dioxide gas.

### [Example 4] Experiment of remaining flavor component

### (1) Experimental methods

### (1-1) Test sample

Assuming Japanese sake, a model water prepared by adding 250 µL of ethyl caproate (Ethyl hexanoate; a main flavor component in Japanese sake) to 25 L of a 15% ethanol solution was used as a sample water.

### (1-2) Treatment with low-pressure micro-nano bubble carbon dioxide and treatment conditions

The same low-pressure micro-nano bubble carbon dioxide treatment apparatus and the same operations as those in Example 1 were applied. Treatment conditions consisted of a treatment temperature of 40°C, a treatment pressure of 2 MPa, an amount of carbon dioxide supplied of 2,000 mL/min, and a treatment time of 40 minutes, which were considered to enable completion sterilization of hiochi bacteria. Under these conditions of the present experiment, the flavor of Japanese sake was considered most likely to disappear.

### (1-3) Flavor analysis

Flavor components were extracted from a sample according to a Porapak Q column extraction method that is a method for extracting flavor components from a food product. That is to say, 200 mL of a sample solution before and after the low-pressure micro-nano bubble carbon dioxide treatment was allowed to pass through a glass column (2 cm x 10 cm) filled with 10 mL of Porapak Q (polydivinylbenzene, 50-80 mesh, Waters Co., Ltd., Milford, MA), so as to adsorb the flavor components on the Porapak Q. Thereafter, the inside of the column was washed with 100 mL of distilled water, and the flavor components were then eluted with 100 mL of diethyl ether (Wako Pure Chemical Industries, Ltd.). As an internal standard substance, 100 µL of 0.1% cyclohexanol solution (Katayama Chemical, Ltd.) was added to the eluant, and the obtained solution was then subjected to dehydration with anhydrous sodium sulfate (Wako Pure Chemical Industries, Ltd.) overnight. Thereafter, the resultant was concentrated to a volume of approximately 40 µL using nitrogen gas, and it was then quantified by gas chromatography (GC) analysis.

### (2) Experimental results

The remaining rate of ethyl caproate after the low-pressure micro-nano bubble carbon dioxide treatment is shown in Table 1. In addition, for comparison, the remaining rate of ethyl caproate after a treatment with supercritical carbon dioxide is shown in Table 2.

**[Table 1]**

| | Before treatment | After treatment (open system) | After treatment (closed system) |
|---|---|---|---|
| Remaining rate (%) | 100 | 72 | 88 |

Open system: Carbon dioxide is continuously supplied during the treatment time, and a carbon dioxide portion causing overpressure is discharged from an open valve 115, so that the treatment pressure is maintained.
Closed system: Carbon dioxide is continuously supplied during the treatment time, and when it causes overpressure, the supply of carbon dioxide is terminated. When the pressure becomes lower than the predetermined pressure due to the dissolution of carbon dioxide in the treatment solution, carbon dioxide is supplied again so as to maintain the treatment pressure.

**[Table 2]**

| | Before treatment | After treatment¹⁾ | After treatment²⁾ |
|---|---|---|---|
| Remaining rate (%) | 100 | 0 | 0 |

| | | | |
|---|---|---|---|
| 1) 35°C, 10 MPa, 13 min (unpublished, Kobayashi et al., 2005) 2) 35°C, 25 MPa, 30 min (Ishikawa et al., 1995, Inactivation of Enzymes in Namazake Using Micro-bubble Supercritical Carbon Dioxide. Biosci. Biotech. Biochem., 59(6), 1027-1031.) | | | |

Ethyl caproate was almost completely lost by the supercritical carbon dioxide treatment (Table 2). In contrast, a majority of ethyl caproate remained after the low-pressure micro-nano bubble carbon dioxide treatment (Table 1).

This specification includes the contents as disclosed in the specification and/or drawings of Japanese Patent Application (Patent Application No. 2007-198650), which is a priority document of the present application.

## Claims

1. A method for treating a liquid food product, which is **characterized in that** the method comprises allowing microscopic bubbles of carbon dioxide generated utilizing a negative pressure in the presence of the carbon dioxide and a liquid to come into contact with a liquid food product containing microorganisms or enzymes at a pressure of 0.2 to 2 MPa in a pressure-resistance container, thereby sterilizing the microorganisms or deactivating the enzymes in the food product.

2. The method for treating a liquid food product according to claim 1, which is **characterized in that** the microscopic bubbles of carbon dioxide are allowed to come into contact with the liquid food product in the presence of ethanol.

3. The method for treating a liquid food product according to claim 2, which is **characterized in that** the abundance of the ethanol in the liquid food product is 0.1 to 30% by mass.

4. The method for treating a liquid food product according to claim 1, which is **characterized in that** the liquid food product is a production intermediate of an alcoholic beverage.

5. The method for treating a liquid food product according to claim 4, which is **characterized in that** the production intermediate of an alcoholic beverage is sake before pasteurization, wine before the addition of sulfurous acid or sulfite, or beer before filtration or heat treatment.

6. The method for treating a liquid food product according to any one of claims 1 to 5, which is **characterized in that** carbon dioxide is recovered after the microscopic bubbles thereof have been allowed to come into contact with the liquid food product, and the recovered carbon dioxide is used again in the treatment of a food product.

7. A method for treating a solid food product, which is **characterized in that** it comprises the steps of: (1) maintaining, in a first container, microscopic bubbles of carbon dioxide generated utilizing a negative pressure in the presence of the carbon dioxide and a liquid, at a pressure of 0.2 to 2 MPa in the liquid; (2) placing a solid food product containing microorganisms or enzymes in a second container and then supplying carbon dioxide thereto, such that the pressure in the second container becomes equal to that in the first container; and (3) allowing the liquid in which the microscopic bubbles of carbon dioxide are maintained to come into contact with the solid food product, thereby sterilizing the microorganisms or deactivating the enzymes in the food product.

8. The method for treating a solid food product according to claim 7, which is **characterized in that** the solid food product is a vegetable or a fruit.

9. An apparatus for treating a liquid food product, which comprises: a carbon dioxide supplying source; a microscopic bubble generating member that can communicate with the carbon dioxide supplying source and that converts the supplied carbon dioxide to microscopic bubbles; a liquid food product storing tank for storing a liquid food product, inside which the microscopic bubble generating member is disposed; a treated liquid food product storing tank for storing a liquid food product discharged from the liquid food product storing tank; and a carbon dioxide recovering member that can communicate with the treated liquid food product storing tank and the carbon dioxide supplying source and that captures the carbon dioxide in the treated liquid food product storing tank and returns the captured carbon dioxide to the carbon dioxide supplying source,
the liquid food product treatment apparatus being **characterized in that** the microscopic bubble generating member for generating the microscopic bubbles of carbon dioxide utilizes a negative pressure in the presence of the carbon dioxide and a liquid to generate the microscopic bubbles of the carbon dioxide.

10. An apparatus for treating a solid food product, which comprises: a carbon dioxide supplying source; a microscopic bubble generating member that can communicate with the carbon dioxide supplying source and that converts the supplied carbon dioxide to microscopic bubbles; a liquid storing tank for storing a liquid, inside which the microscopic bubble generating member is disposed; and a solid food product storing tank for storing a solid food product that can communicate with the carbon dioxide supplying source and the liquid storing tank,
the solid food product treatment apparatus being **characterized in that** the microscopic bubble generating member for generating the microscopic bubbles of carbon dioxide utilizes a negative pressure in the presence of the carbon dioxide and a liquid to generate the microscopic bubbles of the carbon dioxide.

## Patentansprüche

1. Verfahren zum Behandeln eines flüssigen Nahrungsmittelprodukts, welches **dadurch gekennzeichnet ist, dass** das Verfahren umfasst: Ermöglichen, dass mikroskopische Blasen von Kohlendioxid, welche unter Verwendung eines negativen Drucks bei dem Vorhandensein des Kohlendioxids und einer Flüssigkeit erzeugt werden, in Kontakt mit einem flüssigen Nahrungsmittelprodukt, welches Mikroorganismen oder Enzyme enthält, bei einem Druck von 0,2 bis 2 MPa in einem druckbeständigen Behälter kommen, wodurch in dem Nahrungsmittelprodukt die Mikroorganismen sterilisiert oder die Enzyme deaktiviert werden.

2. Verfahren zum Behandeln eines flüssigen Nahrungsmittelprodukts nach Anspruch 1, welches **dadurch gekennzeichnet ist, dass** den mikroskopischen Blasen von Kohlendioxid ermöglicht wird, bei dem Vorhandensein von Ethanol in Kontakt mit dem flüssigen Nahrungsmittelprodukt zu kommen.

3. Verfahren zum Behandeln eines flüssigen Nahrungsmittelprodukts nach Anspruch 2, welches **dadurch gekennzeichnet ist, dass** die Menge des Ethanols in dem flüssigen Nahrungsmittelprodukt 0,1 bis 30 Gew.-% beträgt.

4. Verfahren zum Behandeln eines flüssigen Nahrungsmittelprodukts nach Anspruch 1, welches **dadurch gekennzeichnet ist, dass** das flüssige Nahrungsmittelprodukt ein Herstellungszwischenprodukt eines alkoholischen Getränks ist.

5. Verfahren zum Behandeln eines flüssigen Nahrungsmittelprodukts nach Anspruch 4, welches **dadurch gekennzeichnet ist, dass** das Herstellungszwischenprodukt eines alkoholischen Getränks Sake vor einer Pasteurisierung, Wein vor der Beigabe von schwefeliger Säure oder Sulfit oder Bier vor einer Filtration oder Wärmebehandlung ist.

6. Verfahren zum Behandeln eines flüssigen Nahrungsmittelprodukts nach einem der Ansprüche 1 bis 5, welches **dadurch gekennzeichnet ist, dass** Kohlendioxid zurückgewonnen wird, nachdem den mikroskopischen Blasen davon ermöglicht wurde, in Kontakt mit dem flüssigen Nahrungsmittelprodukt zu kommen, und dass das zurückgewonnene Kohlendioxid wieder bei der Behandlung eines Nahrungsmittelprodukts verwendet wird.

7. Verfahren zum Behandeln eines festen Nahrungsmittelprodukts, welches **dadurch gekennzeichnet ist, dass** es die Schritte umfasst: (1) Halten von mikroskopischen Blasen von Kohlendioxid, welche unter Verwendung eines negativen Drucks bei dem Vorhandensein des Kohlendioxids und einer Flüssigkeit erzeugt werden, bei einem Druck von 0,2 bis 2 MPa in der Flüssigkeit in einem ersten Behälter; (2) Platzieren eines festen Nahrungsmittelprodukts, welches Mikroorganismen oder Enzyme enthält, in einem zweiten Behälter und dann Zuführen von Kohlendioxid dazu, sodass der Druck in dem zweiten Behälter gleich dem in dem ersten Behälter wird; und (3) Ermöglichen der Flüssigkeit, in welcher die mikroskopischen Blasen von Kohlendioxid gehalten werden, in Kontakt mit dem festen Nahrungsmittelprodukt zu kommen, wodurch in dem Nahrungsmittelprodukt die Mikroorganismen sterilisiert oder die Enzyme deaktiviert werden.

8. Verfahren zum Behandeln eines festen Nahrungsmittelprodukts nach Anspruch 7, welches **dadurch gekennzeichnet ist, dass** das feste Nahrungsmittelprodukt ein Gemüse oder eine Frucht ist.

9. Vorrichtung zum Behandeln eines flüssigen Nahrungsmittelprodukts, welche umfasst: eine Kohlendioxidzuführungsquelle; ein Element zum Erzeugen mikroskopischer Blasen, welches mit der Kohlendioxidzuführungsquelle in Verbindung stehen kann und welches das zugeführte Kohlendioxid in mikroskopische Blasen wandelt; einen Flüssignahrungsmittelproduktspeichertank zum Speichern eines flüssigen Nahrungsmittelprodukts, in welchem das Element zum Erzeugen der mikroskopischen Blasen angeordnet ist; einen Speichertank für behandelte Flüssignahrungsmittelprodukte zum Speichern eines flüssigen Nahrungsmittelprodukts, welches von dem Flüssignahrungsmittelproduktspeichertank abgegeben wird; und ein Kohlendioxidrückgewinnungselement, welches mit dem Speichertank für behandelte Flüssignahrungsmittelprodukte und der Kohlendioxidzuführungsquelle in Verbindung stehen kann und welches das Kohlendioxid in dem Speichertank für behandelte Flüssignahrungsmittelprodukte auffängt und das aufgefangene Kohlendioxid zu der Kohlendioxidzuführungsquelle zurückführt,
wobei die Flüssignahrungsmittelproduktbehandlungsvorrichtung **dadurch gekennzeichnet ist, dass** das Element zum Erzeugen der mikroskopischen Blasen zum Erzeugen der mikroskopischen Blasen von Kohlendioxid einen negativen Druck bei dem Vorhandensein des Kohlendioxids und einer Flüssigkeit verwendet, um die mikroskopischen Blasen von dem Kohlendioxid zu erzeugen.

10. Vorrichtung zum Behandeln eines festen Nahrungsmittelprodukts, welche umfasst: eine Kohlendioxidzuführungsquelle; ein Element zum Erzeugen mikroskopischer Blasen, welches mit der Kohlendioxidzuführungsquelle in Verbindung stehen kann und welches das zugeführte Kohlendioxid in mikroskopische Blasen wandelt; einen Flüssigkeitsspeichertank zum Speichern einer Flüssigkeit, in welchem das Element zum Erzeugen mikroskopischer Blasen angeordnet ist; und einen Festnahrungsmittelproduktspeichertank zum Speichern eines festen Nahrungsmittelprodukts, welcher in Verbindung mit der Kohlendioxidzuführungsquelle und dem Flüssigkeitsspeichertank stehen kann,
wobei die Festnahrungsmittelproduktbehandlungsvorrichtung **dadurch gekennzeichnet ist, dass** das Erzeugungelement für mikroskopische Blasen zum Erzeugen der mikroskopischen Blasen aus Kohlendioxid einen negativen Druck bei dem Vorhandensein des Kohlendioxids und einer Flüssigkeit verwendet, um die mikroskopischen Blasen des Kohlendioxids zu erzeugen.

## Revendications

1. Procédé de traitement d'un produit alimentaire liquide, qui est **caractérisé en ce que** ce procédé comporte le fait de laisser des bulles microscopiques de dioxyde de carbone, générées au moyen d'une pression négative en présence de dioxyde de carbone et d'un liquide, entrer en contact avec un produit alimentaire liquide contenant des microorganismes ou des enzymes, sous une pression de 0,2 à 2 MPa, dans un récipient résistant à la pression, ce qui entraîne, dans le produit alimentaire, la stérilisation des microorganismes ou la désactivation des enzymes.

2. Procédé de traitement d'un produit alimentaire liquide, conforme à la revendication 1, **caractérisé en ce qu'**on laisse les bulles microscopiques de dioxyde de carbone entrer en contact avec le produit alimentaire liquide en présence d'éthanol.

3. Procédé de traitement d'un produit alimentaire liquide, conforme à la revendication 2, **caractérisé en ce que** la teneur en éthanol du produit liquide alimentaire vaut de 0,1 à 30 % en masse.

4. Procédé de traitement d'un produit alimentaire liquide, conforme à la revendication 1, **caractérisé en ce que** le produit alimentaire liquide est un produit intermédiaire dans la production d'une boisson alcoolisée.

5. Procédé de traitement d'un produit alimentaire liquide, conforme à la revendication 4, **caractérisé en ce que** le produit intermédiaire dans la production d'une boisson alcoolisée est du saké avant pasteurisation, du vin avant addition d'acide sulfureux ou de sulfite, ou de la bière avant filtration ou chauffage.

6. Procédé de traitement d'un produit alimentaire liquide, conforme à l'une des revendications 1 à 5, **caractérisé en ce que**, après avoir laissé les bulles microscopiques de dioxyde de carbone entrer en contact avec le produit alimentaire liquide, on récupère ce gaz et on utilise de nouveau ce dioxyde de carbone récupéré dans le traitement d'un produit alimentaire.

7. Procédé de traitement d'un produit alimentaire solide, qui est **caractérisé en ce que** ce procédé comporte les étapes suivantes :
1) dans un premier récipient, maintenir des bulles microscopiques de dioxyde de carbone, générées au moyen d'une pression négative en présence de dioxyde de carbone et d'un liquide, sous une pression de 0,2 à 2 MPa au sein du liquide ;
2) mettre dans un deuxième récipient un produit alimentaire solide contenant des microorganismes ou des enzymes, puis y introduire du dioxyde de carbone de telle manière que la pression régnant dans le deuxième récipient devienne égale à celle régnant dans le premier récipient ;
3) et laisser le liquide dans lequel sont maintenues les bulles microscopiques de dioxyde de carbone entrer en contact avec le produit alimentaire solide, ce qui entraîne, dans ce produit alimentaire, la stérilisation des microorganismes ou la désactivation des enzymes.

8. Procédé de traitement d'un produit alimentaire solide, conforme à la revendication 7, **caractérisé en ce que** le produit alimentaire solide est un légume ou un fruit.

9. Appareillage conçu pour traiter un produit alimentaire liquide, qui comprend :
- une source d'alimentation en dioxyde de carbone ;
- un générateur de bulles microscopiques, qui peut communiquer avec la source d'alimentation en dioxyde de carbone et qui met sous forme de bulles microscopiques le dioxyde de carbone introduit ;
- une cuve de réserve de produit alimentaire liquide, qui contient le produit alimentaire liquide et à l'intérieur de laquelle est placé le générateur de bulles microscopiques ;
- une cuve de stockage de produit alimentaire liquide traité, qui sert à stocker le produit alimentaire liquide déchargé de la cuve de réserve de produit alimentaire liquide ;
- et un récupérateur de dioxyde de carbone, qui peut communiquer avec la cuve de stockage de produit alimentaire liquide traité et avec la source d'alimentation en dioxyde de carbone, et qui capte le dioxyde de carbone présent dans la cuve de stockage de produit alimentaire liquide traité et renvoie le dioxyde de carbone capté à la source d'alimentation en dioxyde de carbone,
lequel appareillage de traitement de produit alimentaire liquide est **caractérisé en ce que** le générateur de bulles microscopiques qui sert à générer les bulles microscopiques de dioxyde de carbone fonctionne au moyen d'une pression négative, en présence de dioxyde de carbone et d'un liquide, pour générer les bulles microscopiques de dioxyde de carbone.

10. Appareillage conçu pour traiter un produit alimentaire solide, qui comprend :
- une source d'alimentation en dioxyde de carbone ;
- un générateur de bulles microscopiques, qui peut communiquer avec la source d'alimentation en dioxyde de carbone et qui met sous forme de bulles microscopiques le dioxyde de carbone introduit ;
- une cuve de réserve de liquide, qui contient un liquide et à l'intérieur de laquelle est placé le générateur de bulles microscopiques ;
- et une cuve de réserve de produit alimentaire solide, qui sert à contenir le produit alimentaire solide et qui peut communiquer avec la source d'alimentation en dioxyde de carbone et avec la cuve de réserve de liquide ;
lequel appareillage de traitement de produit alimentaire solide est **caractérisé en ce que** le générateur de bulles microscopiques qui sert à générer les bulles microscopiques de dioxyde de carbone fonctionne au moyen d'une pression négative, en présence de dioxyde de carbone et d'un liquide, pour générer les bulles microscopiques de dioxyde de carbone.
